# EUROPEAN PATENT SPECIFICATION

(11) **EP 3 082 304 B1**
(45) Date of publication and mention of the grant of the patent: **20.02.2019**
(21) Application number: 13900725.6
(22) Date of filing: 30.12.2013
(51) Int. Cl.: H04L 12/64, H04L 12/723, H04L 12/851, H04L 29/06

(54) **SERVICE ROUTING METHOD AND SYSTEM**
DIENSTROUTINGVERFAHREN UND -SYSTEM
PROCÉDÉ ET SYSTÈME DE ROUTAGE DE SERVICE

(43) Date of publication of application: 19.10.2016
(60) Divisional application: 18248094.7
(73) Proprietor: Huawei Technologies Co., Ltd., Longgang District Shenzhen, Guangdong 518129 (CN)
(72) Inventor: ZHOU, Han, Shenzhen Guangdong 518129 (CN); HU, Weihua, Shenzhen Guangdong 518129 (CN); WANG, Yan, Shenzhen Guangdong 518129 (CN); YANG, Xuejiao, Shenzhen Guangdong 518129 (CN)
(74) Representative: Körber, Martin Hans
(86) International application number: PCT/CN2013/090869
(87) International publication number: WO 2015/100530

(56) References cited:
- WO-A1-2013/189272
- CN-A- 1 601 966
- JIANG H LI HUAWEI Y: "An Architecture of Service Chaining; draft-jiang-sfc-arch-00.txt", AN ARCHITECTURE OF SERVICE CHAINING; DRAFT-JIANG-SFC-ARCH-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 15 October 2013 (2013-10-15), pages 1-11, XP015095250, [retrieved on 2013-10-15]
- DUNBAR D EASTLAKE HUAWEI L: "Layer 4-7 Service Chain problem statement; draft-dunbar-l4-l7-sc-problem-statement-00 .txt", LAYER 4-7 SERVICE CHAIN PROBLEM STATEMENT; DRAFT-DUNBAR-L4-L7-SC-PROBLEM-STATEMENT-00 .TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 11 July 2013 (2013-07-11), pages 1-16, XP015094456, [retrieved on 2013-07-11]
- NIU H LI Y JIANG HUAWEI L: "Service Chaining Header and Service Chaining Mechanism; draft-niu-service-chaining-header-00.txt", SERVICE CHAINING HEADER AND SERVICE CHAINING MECHANISM; DRAFT-NIU-SERVICE-CHAINING-HEADER-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 15 July 2013 (2013-07-15), pages 1-9, XP015093999, [retrieved on 2013-07-15]

## Description

### TECHNICAL FIELD

The present invention relates to the field of communications technologies, and in particular, to a service routing method, device, and system.

### BACKGROUND

A service routing system includes a traffic classifier (Traffic Classifier, TC) and a service enabler (Service Enabler, SE). The traffic classifier is mainly used to identify service categories of uplink and downlink data packets, and the service enabler is used to perform different service processing on the data packet. Generally service enablers include a video optimizer, a traffic compressor, a data buffer, a deep packet inspector, a Hypertext Transfer Protocol (Hypertext transfer protocol, HTTP) header enhancer, and the like.

After identifying a service type of a data packet, the traffic classifier sends the data packet to a service enabler according to a service routing policy configured in the data packet. After the service enabler finishes processing the data packet, the service enabler sends the data packet to the traffic classifier, and the traffic classifier further performs data packet identification. Then, the traffic classifier further sends the data packet to a next-hop service enabler according to a service routing policy configured in the data packet. The data packet is routed back and forth between the traffic classifier and service enablers, until the data packet undergoes enabling processing of the last-hop service enabler. The traffic classifier further sends the data packet to the Internet (Internet) or a data gateway, such as a packet data network gateway (Packet Data Gateway, PGW) or a gateway GPRS support node (gateway GPRS support node, GGSN).

In a process of studying and practicing the prior art, it is found that in a current service routing system, after a service enabler performs enabling processing on all data packets, the service enabler needs to further send the data packets to a traffic classifier, and the traffic classifier determines to send the data packets to which service enabler in next-hop routing. This service routing processing manner causes extremely heavy data traffic between the service enabler and the traffic classifier, leading to data processing overload on the traffic classifier, thereby making the traffic classifier become a bottleneck of data traffic processing.

JIANG H LI HUAWEI Y, "An Architecture of Service Chaining; draft-jiang-sfc-arch-OO.txt", AN ARCHITECTURE OF SERVICE CHAINING; DRAFT-JIANG-SFC-ARCH-OO.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, (20131015), pages 1 - 11, discloses a general abstract architecture for service chaining.

### SUMMARY

Embodiments of the present invention provide a service routing method according to independent claim 1, which may lighten data processing load of a traffic classifier and improve service routing efficiency. The embodiments of the present invention further provide a corresponding system according to independent claim 4.

In the prior art, service routing causes extremely heavy data traffic between a service enabler and a traffic classifier, leading to data processing overload on the traffic classifier; therefore, the traffic classifier becomes a bottleneck of data traffic processing. By contrast, in the service routing method provided in the embodiments of the present invention, a traffic classifier may attach, to a data packet, a data routing label used to identify a routing path, and send the data packet to which the data routing label is attached to a switch, so that the switch controls, according to the service data routing label, the data packet to be routed according to the routing path, thereby reducing data traffic of the traffic classifier and lightening load on the traffic classifier.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person skilled in the art may still derive other drawings from these accompanying drawings without creative efforts.
FIG. 1 is a schematic diagram of an embodiment of a service routing method according to an embodiment of the present invention;
FIG. 2 is a schematic diagram of an embodiment of a service routing system according to an embodiment of the present invention;
FIG. 3 is a schematic diagram of another embodiment of a service routing system according to an embodiment of the present invention;
FIG. 4 is a schematic diagram of another embodiment of a service routing system according to an embodiment of the present invention;
FIG. 5 is a schematic diagram of another embodiment of a service routing system according to an embodiment of the present invention;
FIG. 6A to FIG. 6H are schematic diagrams of other embodiments of a service routing system according to an embodiment of the present invention;
FIG. 7 is a schematic diagram of an embodiment of a traffic classifier according to an embodiment of the present invention;
FIG. 8 is a schematic diagram of another embodiment of a traffic classifier according to an embodiment of the present invention;
FIG. 9 is a schematic diagram of an embodiment of a switch according to an embodiment of the present invention;
FIG. 10 is a schematic diagram of another embodiment of a switch according to an embodiment of the present invention;
FIG. 11 is a schematic diagram of an embodiment of a service chain selecting apparatus according to an embodiment of the present invention;
FIG. 12 is a schematic diagram of an embodiment of a service route selecting apparatus according to an embodiment of the present invention;
FIG. 13 is a schematic diagram of an embodiment of a service route selecting apparatus according to an embodiment of the present invention;
FIG. 14 is a schematic diagram of an embodiment of a service routing rule determining apparatus according to an embodiment of the present invention;
FIG. 15 is a schematic diagram of another embodiment of a traffic classifier according to an embodiment of the present invention;
FIG. 16 is a schematic diagram of another embodiment of a switch according to an embodiment of the present invention;
FIG. 17 is a schematic diagram of another embodiment of a service chain selecting apparatus according to an embodiment of the present invention;
FIG. 18 is a schematic diagram of another embodiment of a service route selecting apparatus according to an embodiment of the present invention; and
FIG. 19 is a schematic diagram of another embodiment of a service routing rule determining apparatus according to an embodiment of the present invention.

### DESCRIPTION OF EMBODIMENTS

Embodiments of the present invention provide a service routing method, which may lighten data processing load of a traffic classifier and improve service routing efficiency. The embodiments of the present invention further provide a corresponding device and system. Details are separately illustrated in the following.

The following describes the technical solutions in the embodiments of the present invention with reference to the accompanying drawings in the embodiments of the present invention. Apparently, the described embodiments are merely some but not all of the embodiments of the present invention. All other embodiments obtained by a person skilled in the art based on the embodiments of the present invention without creative efforts shall fall within the protection scope of the present invention.

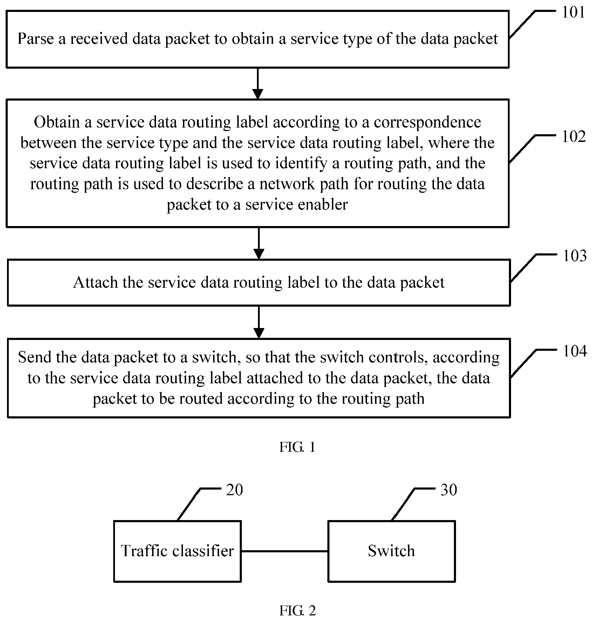

Referring to FIG. 1, an embodiment of a service routing method according to an embodiment of the present invention includes:
101. Parse a received data packet to obtain a service type of the data packet.

Exemplarily, the service type of the data packet may be a video service, File Transfer Protocol (FTP, File Transfer Protocol) downloading, web page browsing, a peer-to-peer (Peer-to-Peer, P2P) application, and the like.

102. Obtain a service data routing label according to a correspondence between the service type and the service data routing label, where the service data routing label is used to identify a routing path, and the routing path is used to describe a network path for routing the data packet to a service enabler.

A service data routing label may identify a routing path, and the routing path refers to a network path through which a data packet passes when the data packet is routed to service enablers (SE, Service Enabler) in sequence. For example, a data packet needs to be routed to three service enablers SE1, SE2, and SE3 successively. If SE1 and SE2 are connected to switch1, and SE3 is connected to switch2, a routing path is switch1->SE1->switch1->SE2->switch1->switch2->SE3->switch2->another network device. The service data routing label may be represented by using an existing network protocol layer, such as a VLAN ID, a VxLAN ID, or a GRE Header, or may use a newly defined label, such as composition of descriptors of all service enablers or composition of IP or MAC addresses of all service enablers.

Exemplarily, a correspondence between a service type and a service data routing label may be preset. For example, a VLAN ID is used as a service data routing label. Refer to Table 1 to understand the correspondence between a service type and a service data routing label.

**Table 1: Correspondence between a service type and a service data routing label**

| **Service type** | **Service data routing label** |
|---|---|
| Video service | VLAN ID 1 |
| FTP downloading | VLAN ID 2 |
| Web page browsing | VLAN ID 3 |

It may be learned from Table 1 that when a service type is a video service, a service data routing label is VLAN ID 1, and then a data packet of the video service can be routed according to a routing path indicated by VLAN ID 1.

Certainly, Table 1 only lists some examples. In practice, there may be various service types, and there may also be various service data routing labels. In addition, the correspondence between a service type and a service data routing label is not limited to the examples in Table 1.

103. attach the data routing label to the data packet.

Exemplarily, the data routing label may be attached to a header of the data packet.

104. Send the data packet to a switch, so that the switch controls, according to the service data routing label attached to the data packet, the data packet to be routed according to the routing path.

After the data packet to which the data routing label is attached is sent to the switch, the switch can control, according to the data routing label, the data packet to be routed according to the routing path identified by the data routing label.

For example, after receiving a data packet to which a data routing label is attached, switch1 determines, according to the data routing label, that a corresponding routing path is: switch1->SE1->switch1->SE2->switch1->switch2->SE3->switch2->another network device. Then, the data packet may be sent to SE1; after SE1 returns a processed data packet, switch1 further sends the data packet processed by SE1 to SE2; after SE2 returns a processed data packet, switch1 further sends the data packet processed by SE2 to switch2. Switch2 determines, according to the data routing label, that the corresponding routing path is: switch1->SE1->switch1->SE2->switch1->switch2->SE3->switch2->another network device. Then, switch2 may send the data packet processed by SE2 to SE3; after SE3 returns a processed data packet, switch2 sends the data packet processed by SE3 to the another network device.

In the prior art, service routing causes extremely heavy data traffic between a service enabler and a traffic classifier, leading to data processing overload on the traffic classifier; therefore, the traffic classifier becomes a bottleneck of data traffic processing. By contrast, in the service routing method provided in this embodiment of the present invention, a traffic classifier may attach, to a data packet, a data routing label used to identify a routing path, and send the data packet to which the data routing label is attached to a switch, so that the switch controls, according to the service data routing label, the data packet to be routed according to the routing path, thereby reducing data traffic of the traffic classifier and lightening load on the traffic classifier.

Optionally, based on the foregoing embodiment corresponding to FIG. 1, in another embodiment of the service routing method according to this embodiment of the present invention, the method may further include:
obtaining a service chain according to the service type and a correspondence between the service type and the service chain, where the service chain is used to describe service enabling processing that needs to be performed on the data packet;
selecting the service enabler according to the service enabling processing; and
determining the routing path according to the service chain and information about the selected service enabler.

In this embodiment of the present invention, a service chain is used to describe service enabling processing that a data packet needs to undergo in sequence. For example, video optimization enabling processing is first performed, traffic compression enabling processing is performed next, and then data caching enabling processing is performed.

Certainly, types of service enabling processing are not limited to the foregoing several enumerated types and may further include deep packet inspection enabling processing, Hypertext Transfer Protocol (Hypertext transfer protocol, HTTP) header enhancement enabling processing, and the like.

A description form of the service chain may use the following two manners but is not limited to the two manners:
a service chain label, where the service chain label may use an existing tunnel label, such as a VLAN ID, a VxLAN ID, or a GRE Header, or may use a newly defined label; a form of the service chain label is not limited herein; and
a service chain descriptor, where for example, a service chain is described in a manner of a Url expression, such as TCP proxy->Cache->Firewall, or the service chain is expressed by using a profile name, for example, video optimization is used to represent a service chain for video optimization.

For a correspondence between a service type and a service chain, refer to Table 2 for understanding.

**Table 2: Correspondence between a service type and a service chain descriptor**

| **Service type** | **Service chain descriptor** |
|---|---|
| Web service | TCP proxy->>Cache->>Firewall |
| Video service | video optimization |

Certainly, Table 2 only lists some examples. In practice, there may be various service types, and there may also be various service chain descriptors. In addition, the correspondence between a service type and a service chain descriptor is not limited to the several examples in Table 2. There may also be a correspondence between a service type and another service chain descriptor, and there may also be a correspondence between a service type and a service chain label; details are not described herein.

The process of selecting the service enabler according to the service enabling processing may be understood as follows:
An enabling processing resource pool of the service enabler may be determined according to the service enabling processing. For example, a resource pool of service enablers of video optimization is determined, where there are many service enablers of video optimization in the resource pool of service enablers of video optimization, and one service enabler may be randomly selected or multiple service enablers may be selected from the resource pool.

If a service enabler SE1 is selected from the resource pool of video optimization, a service enabler SE2 is selected from a resource pool of traffic compression, and a service enabler SE3 is selected from a resource pool of data caching, a specific routing sequence may be determined according to a service chain. For example, the service chain indicates that a route is determined in a sequence of video optimization, traffic compression, and data caching. If a sequence of service enabling processing is video optimization, traffic compression, and data caching, it may be determined that service enablers that a data packet needs to successively pass through are SE1->SE2->SE3.

The information about the service enabler may include an IP address of the service enabler, a connection relationship between the service enabler and a peripheral network element, and the like. For example, SE1 and SE2 are connected to switch1, and SE3 is connected to switch2.

In this way, the routing path determined according to the service chain and the information about the service enabler may be: switch1->SE1->switch1->SE2->switch1->switch2->SE3->switch2->another network device.

Optionally, the selecting the service enabler according to the service enabling processing type may include:
selecting multiple service enablers of the same service enabling processing; and
determining multiple routing paths according to the selected multiple service enablers of the same service enabling processing and the service chain.

In this embodiment of the present invention, a resource pool of a service enabler may be determined according to a service enabling processing type. For example, a resource pool of service enablers of video optimization is determined, where there are many service enablers of video optimization in the resource pool of service enablers of video optimization, and multiple service enablers may be selected from the resource pool. For example, SE1, SE4, and SE7 are selected from the resource pool of video optimization, SE2, SE5, and SE8 are selected from a resource pool of traffic compression, and SE3, SE6, and SE9 are selected from a resource pool of data caching.

A specific routing sequence is determined according to a sequence, indicated by the service chain, of video optimization, traffic compression, and data caching. If a sequence of service enabling processing is video optimization, traffic compression, and data caching, it may be determined that service enablers that a data packet needs to pass through on each chain are SE1->SE2->SE3, SE4-SE5-SE6, and SE7-SE8-SE9. Certainly, nine service chains may be arranged according to a permutation and combination method; only three options are enumerated herein for description, and the others are not enumerated one by one.

If it may be learned according to information about the service enablers that SE1, SE4, and SE7 are connected to switch1, SE2, SE5, and SE8 are connected to switch2, and SE3, SE6, and SE9 are connected to switch3, it may be determined that a routing path that includes service enablers SE1->SE2->SE3 is: switch1->SE1->switch1->switch2->SE2->switch2->switch3->SE3->switch3->another network device; a routing path that includes service enablers SE4-SE5-SE6 is: switch1->SE4->switchl->switch2->SE5->switch2->switch3->SE6->switch3->another network device; a routing path that includes service enablers SE7-SE8-SE9 is: switch1->SE7->switch1->switch2->SE8->switch2->switch3->SE9->switch3->another network device.

In this embodiment of the present invention, a service chain describes which service enabling processing needs to be performed in sequence on a data packet. In this way, a specific service enabler may be selected according to the service chain, and with reference to information about a connection between the specific service enabler and a switch, a routing path that includes the switch and the specific service enabler may be generated. Therefore, the data packet may be routed to the specific service enabler by using the switch, rather than be routed to the specific service enabler by a traffic classifier, thereby reducing data traffic of the traffic classifier and lightening load on the traffic classifier.

Optionally, based on the foregoing optional embodiment corresponding to FIG. 1, in another embodiment of the service routing method according to this embodiment of the present invention, the obtaining a service chain according to the service type and a correspondence between the service type and the service chain may include:
obtaining the service chain according to user service information and a correspondence between the user service information and the service chain, where the user service information includes the service type and subscription information of a user to whom the data packet belongs.

In the foregoing optional embodiment, the correspondence between a service type and a service chain is described. Therefore, a corresponding service chain may be acquired according to a service type; in addition, based on the service type, the subscription information of the user to whom the data packet belongs may be added. The subscription information of the user to whom the data packet belongs may be provided by a policy and charging rules function (Policy and Charging Rules Function, PCRF) entity, and the subscription information of the user to whom the data packet belongs may be subscription information that the user is a gold subscriber, a silver subscriber, or the like.

Both subscription information of a user to whom a data packet belongs and a service type are used to determine a service chain, so that the determined service chain is more accurate, thereby more accurately determining which service enabling processing that a service data packet needs to undergo in sequence.

Optionally, based on the foregoing optional embodiment corresponding to FIG. 1, in another embodiment of the service routing method according to this embodiment of the present invention, the selecting the service enabler according to the service enabling processing may include:
selecting the service enabler according to the service enabling processing and a weighting factor of the service enabler, where the weighting factor includes a priority or load.

In this embodiment of the present invention, during selection of a service enabler, a service enabler of a highest priority or lightest load is selected from a resource pool of a service enabler corresponding to service enabling processing. In this way, the service enabling processing can speed up.

Optionally, based on the foregoing embodiment or optional embodiment corresponding to FIG. 1, in another embodiment of the service routing method according to this embodiment of the present invention, the method may further include:
generating a forwarding rule according to the routing path, so as to control, by using the forwarding rule, the data packet to be routed according to the routing path;
establishing a correspondence between the forwarding rule and the service data routing label; and
sending the correspondence between the forwarding rule and the service data routing label to a switch, so that after acquiring the service data routing label attached to the data packet from the data packet, the switch obtains the forwarding rule according to the service data routing label and the correspondence between the forwarding rule and the service data routing label, and forwards the data packet according to the forwarding rule.

In this embodiment of the present invention, a forwarding rule is generated for each switch according to a routing path, so that the switch can directly route a data packet according to a forwarding rule acquired by the switch, without needing to parse the entire routing path, thereby improving data packet routing efficiency.

In this embodiment of the present invention, the forwarding rule may be that the data packet carrying the service data routing label needs to pass through which switches and which service enablers connected to the switches. For example, two groups of forwarding rules may be generated according to a routing path: switch1->SE1->switch1->switch2->SE2->switch2->switch3->SE3->switch3->network device A. For example, the first group of forwarding rules may include multiple forwarding rules, where the multiple forwarding rules may be switch1->SE1, SE1->switch1->SE2, and SE2->switch1->switch2 successively; the second group of forwarding rules may also include multiple forwarding rules, where the multiple forwarding rules may be switch2->SE3, and SE3->switch2->network device A successively. An association relationship between the service data routing label and each of the two groups of forwarding rules is then established. It is assumed that the service data routing label is VLAN ID1, and then VLAN ID1 is associated with each of the first group of forwarding rules and the second group of forwarding rules.

Then, an association relationship between VLAN ID1 and the first group of forwarding rules is sent to switch1, and an association relationship between VLAN ID1 and the second group of forwarding rules is sent to switch2. After obtaining a data packet to which VLAN ID1 is attached, switch1 performs matching in an association relationship between a forwarding rule and a service data routing label according to the service data routing label VLAN ID1; after the first group of forwarding rules is matched, first sends the data packet to SE1 according to description in the first group of forwarding rules; after receiving a data packet to which VLAN ID1 is attached from SE1, sends the data packet processed by SE1 to SE2; and after receiving a data packet to which VLAN ID1 is attached from SE2, sends the data packet processed by SE2 to switch2. After receiving the data packet to which VLAN ID1 is attached, switch2 performs matching in the association relationship between a forwarding rule and a service data routing label according to the service data routing label VLAN ID1; after the second group of forwarding rules is matched, sends the data packet to SE3 according to description in the second group of forwarding rules; and after receiving a data packet to which VLAN ID1 is attached, sends the data packet processed by SE3 to network device A.

A service enabler only has a service enabling processing capability and does not have a data packet forwarding capability. Therefore, after finishing processing a data packet, the service enabler needs to send a processed data packet to a switch, so as to facilitate subsequent service processing for the data packet.

Optionally, in another embodiment of the service routing method according to this embodiment of the present invention, when multiple service enablers are selected from each enabling processing resource pool, the method may further include:
generating a forwarding rule corresponding to each routing path in the multiple routing paths; and
establishing a correspondence between the forwarding rule corresponding to each routing path and a service data routing label corresponding to each routing path, and generating a weighting factor for the service data routing label corresponding to each routing path according to a weighting factor of the service enabler on each routing path.

In this embodiment of the present invention, for a process of generating a forwarding rule, refer to the process of generating a forwarding rule in the foregoing embodiment for understanding. In this way, multiple groups of forwarding rules are generated when there are multiple routing paths, and each group of forwarding rules is associated with one service data routing label. To facilitate selection performed by a traffic classifier, a weighting factor may be generated, according to a weighting factor of a service enabler on each routing path, for a service data routing label corresponding to a forwarding rule of the routing path. For example, weighting factors of three service enablers on path1 are respectively 0.4, 0.5, and 0.6. Then, a weighting factor of the path may be a product of these weighting factors, that is, 0.12. Therefore, a weighting factor generated for a service data routing label of a forwarding rule of path1 may be 0.12. This is only an example. Certainly, there may be another calculation method; details are not described.

In this embodiment of the present invention, if multiple service enablers are selected for each type of service enabling processing, multiple routing paths may be generated. When there are multiple routing paths, a traffic classifier may select one routing path with best service quality from the multiple routing paths, for example, a routing path with lightest service enabling load and a fastest processing speed, thereby improving data routing efficiency.

Optionally, in another embodiment of the service routing method according to this embodiment of the present invention, the method may further include:
after the obtaining a service data routing label according to a correspondence between the service type and the service data routing label, the method may further include:
selecting, according to a weighting factor of the service data routing label, the service data routing label from multiple service data routing labels corresponding to the service type.

In this embodiment of the present invention, when it is determined according to a service type that there are five service data routing labels corresponding to the service type, for example, weighting factors of the five service data routing labels are respectively 0.1, 0.2, 0.3, 0.3 and 0.1, a specific service data routing label may be selected according to a weighting factor of the service data routing label.

Optionally, based on the foregoing optional embodiment corresponding to FIG. 1, in another embodiment of the service routing method according to this embodiment of the present invention, the method may further include:
when the service enabler is overloaded, selecting a new service enabler according to the service enabling processing, determining a new routing path according to the service chain and information about the new service enabler, and associating the service type with the new routing path.

In this embodiment of the present invention, for example, when SE1 is overloaded, where SE1 is a service enabler of video optimization, a new service enabler of video optimization may be further selected from a resource pool of a service enabler of video optimization, for example, SE4 is selected. In this way, newly re-determined service enablers that a data packet needs to pass through are SE4-SE2-SE3. It may be learned according to information about the new service enabler SE4 that SE4 is connected to switch1, and then it may be determined that a new routing path is: switch1->SE4->switch1->SE1->switch1->switch2->SE3->switch2->another network device. Then, a service type video service is associated with the new routing path: switch1->SE4->switch1->SE1->switch1->switch2->SE3->switch2->another network device. That is, an association relationship between the video service and switch1->SE4->switch1->SE1->switch1->switch2->SE3->switch2->another network device is established.

Optionally, based on the last optional embodiment, in another embodiment of the service routing method according to this embodiment of the present invention, the associating the service type with the new routing path may include:
allocating a new service data routing label, where the new service data routing label identifies the new routing path; and
associating the new service data routing label with the service type.

In this embodiment of the present invention, after a new routing path is determined, a new service data routing label may be allocated to the new routing path. For example, the new service data routing label is VLAN ID 2, the new service data routing label VLAN ID 2 is used to identify the new routing path: switch1->SE4->switch1->SE1->switch1->switch2->SE3->switch2->another network device, and the new service data routing label VLAN ID 2 is associated with a video service.

Optionally, based on either of the foregoing two optional embodiments, in another embodiment of the service routing method according to this embodiment of the present invention, the method may further include:
obtaining a service status of a user service corresponding to the service type, where the service status includes a newly initiated service or an ongoing service; and
attaching, to a data packet of the service, a service data routing label corresponding to the service status.

In this embodiment of the present invention, it is assumed that a user service of the video type is a service newly initiated by a user, and then a new service data routing label of the newly initiated service is VLAN ID 2. If the user service of the video type is an ongoing service, an original service data routing label of the ongoing service is VLAN ID 1.

In this embodiment of the present invention, when a service enabler is overloaded, a new routing path is re-determined; in addition, the new routing path is corresponding to a new service data routing label. When a service status is a newly initiated service, the new service data routing label may be added to a data packet of the newly initiated service. In this way, the data packet of the newly initiated service may bypass the overloaded service enabler, thereby improving routing efficiency of the newly initiated service. In addition, for an ongoing service, it means that some data packets of the service have arrived at a switch. To ensure integrity of data packets, the data packets of the ongoing service still need to be routed according to a routing path corresponding to the original service data routing label.

Optionally, based on the last optional embodiment, in another embodiment of the service routing method according to this embodiment of the present invention, the attaching, to a data packet of the service, a service data routing label corresponding to the service status may include:
if the service status is a newly initiated service, attaching the new service data routing label to a data packet of the service; or,
if the service status is an ongoing service, attaching the service data routing label to a data packet of the service.

In this embodiment of the present invention, when the service status is a newly initiated service, the new service data routing label VLAN ID 2 is encapsulated into the data packet; when the service status is an ongoing service, the original service data routing label VLAN ID 1 is encapsulated into the data packet.

Optionally, based on any one of the foregoing embodiments, in another embodiment of the service routing method according to this embodiment of the present invention, the routing path passes through multiple switches and multiple service enablers, and a quantity of times the routing path passes through a same switch is less than or equal to a total quantity of times the routing path passes through the multiple service enablers.

In this embodiment of the present invention, one or more service enablers may be connected to one switch. When a quantity of times a routing path passes through a same switch is less than or equal to a total quantity of times the routing path passes through the multiple service enablers, pressure on a traffic classifier is relieved, and data packets may be converged on different switches, thereby effectively relieving pressure on the switches.

According to the method in FIG. 1, the following provides, with reference to FIG. 2, a service routing system used to implement the method in FIG. 1.

Referring to FIG. 2, an embodiment of a service routing system according to an embodiment of the present invention includes: a traffic classifier 20 and a switch 30.

The traffic classifier 20 is configured to parse a received data packet to obtain a service type of the data packet; obtain a service data routing label according to a correspondence between the service type and the service data routing label, where the service data routing label is used to identify a routing path, and the routing path is used to describe a network path for routing the data packet to a service enabler; attach the data routing label to the data packet; and send the data packet to the switch; and
the switch 30 is configured to control, according to the service data routing label attached to the data packet, the data packet to be routed according to the routing path.

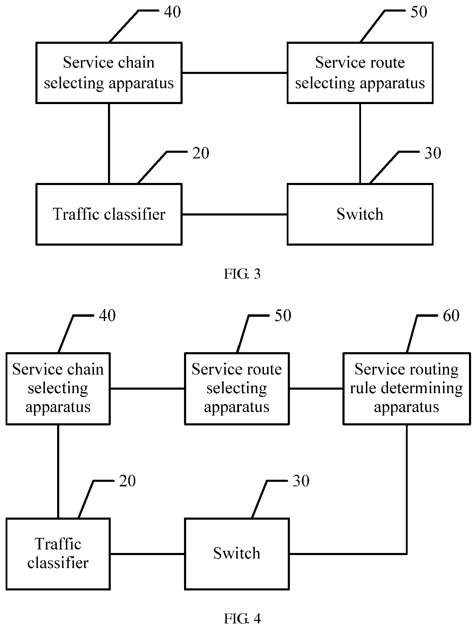

Based on the foregoing embodiment corresponding to FIG. 2, referring to FIG. 3, in another embodiment of the service routing system according to this embodiment of the present invention, the system further includes: a service chain selecting apparatus 40 and a service route selecting apparatus 50.

The service chain selecting apparatus 40 is configured to obtain a service chain according to the service type and a correspondence between the service type and the service chain, where the service chain is used to describe service enabling processing that needs to be performed on the data packet; and
the service route selecting apparatus 50 is configured to select the service enabler according to the service enabling processing; and determine the routing path according to the service chain and information about the selected service enabler.

In another embodiment of the service routing system according to this embodiment of the present invention,
the service chain selecting apparatus 40 is configured to obtain the service chain according to user service information and a correspondence between the user service information and the service chain, where the user service information includes the service type and subscription information of a user to whom the data packet belongs.

In another embodiment of the service routing system according to this embodiment of the present invention,
the service route selecting apparatus 50 is configured to select the service enabler according to the service enabling processing and a weighting factor of the service enabler, where the weighting factor includes a priority or load.

Referring to FIG. 4, in another embodiment of the service routing system according to this embodiment of the present invention, the system further includes a service routing rule determining apparatus 60.

The service routing rule determining apparatus 60 is configured to generate a forwarding rule according to the routing path, so as to control, by using the forwarding rule, the data packet to be routed according to the routing path; establish a correspondence between the forwarding rule and the service data routing label; and send the correspondence between the forwarding rule and the service data routing label to a switch; and
the switch 30 is configured to: after acquiring the service data routing label attached to the data packet from the data packet, obtain the forwarding rule according to the service data routing label and the correspondence between the forwarding rule and the service data routing label, and forward the data packet according to the forwarding rule.

In another embodiment of the service routing system according to this embodiment of the present invention,

the service route selecting apparatus 40 is further configured to: when the service enabler is overloaded, select a new service enabler according to the service enabling processing type, determine a new routing path according to the service chain and information about the new service enabler, and associate the service type with the new routing path.

In another embodiment of the service routing system according to this embodiment of the present invention,
the service route selecting apparatus 40 is configured to allocate a new service data routing label, where the new service data routing label identifies the new routing path; and associate the new service data routing label with the service type.

In another embodiment of the service routing system according to this embodiment of the present invention,
the traffic classifier 20 is further configured to obtain a service status of a user service corresponding to the service type, where the service status includes a newly initiated service or an ongoing service; and attach, to a data packet of the service, a service data routing label corresponding to the service status.

In another embodiment of the service routing system according to this embodiment of the present invention,
the traffic classifier 20 is configured to:
if the service status is a newly initiated service, attach the new service data routing label to a data packet of the service; or,
if the service status is an ongoing service, attach the original service data routing label to a data packet of the service.

In another embodiment of the service routing system according to this embodiment of the present invention,
the service chain selecting apparatus is integrated into a policy and charging rules function (Policy and Charging Rules Function, PCRF) entity and is configured to control any one of a service controller (Service Controller, SC), a traffic classifier (Traffic Classifie, TC), and a data gateway of a data packet route, where the data gateway may be a packet data network gateway (Packet Gateway, PGW) or a gateway GPRS support node (Gateway GPRS Support Node, GGSN), and the service controller SC may be a software-defined networking (soft defined network, SDN) controller;
the route selecting apparatus is integrated into any one of the policy and charging rules function PCRF entity, the service controller SC, the traffic classifier TC, and the data gateway, where the data gateway may be a PGW or a GGSN; and
the service routing rule determining apparatus is integrated into any one of the policy and charging rules function PCRF entity, the service controller SC, the traffic classifier TC, and the data gateway, where the data gateway may be a PGW or a GGSN.

According to the service routing system provided in this embodiment of the present invention, a traffic classifier may attach, to a data packet, a data routing label used to identify a routing path; and send the data packet to which the data routing label is attached to a switch, so that the switch controls, according to the service data routing label, the data packet to be routed according to the routing path, thereby reducing data traffic of the traffic classifier and lightening load on the traffic classifier.

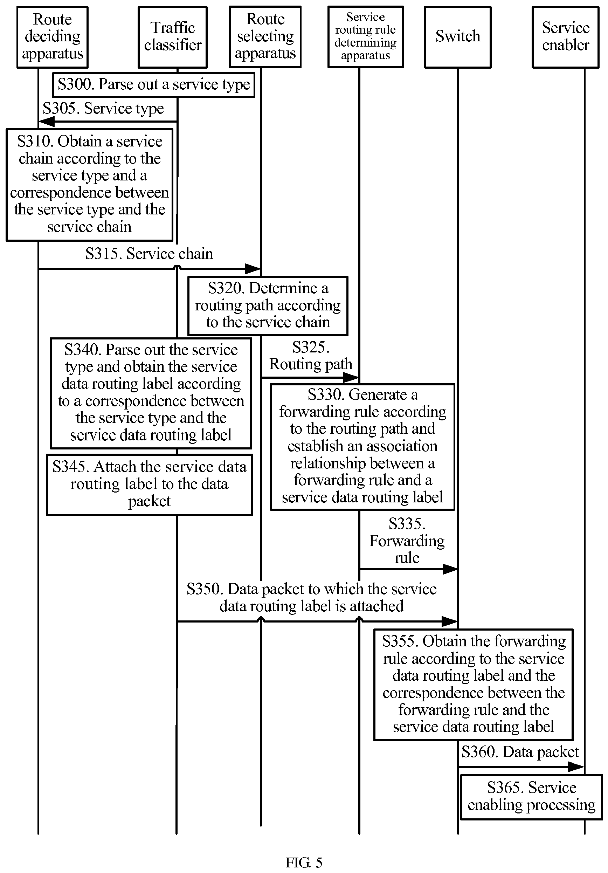

FIG. 5 is a schematic diagram of an embodiment of implementing the method shown in FIG. 1 by using FIG. 2 to FIG. 4 according to an embodiment of the present invention.

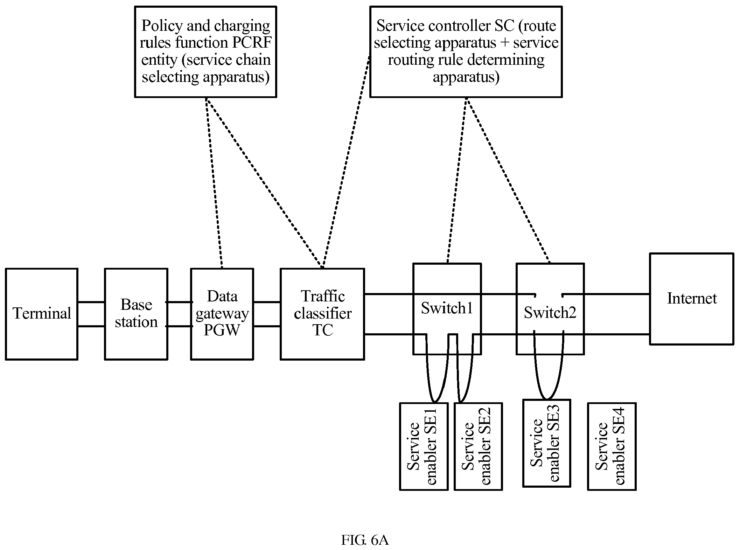

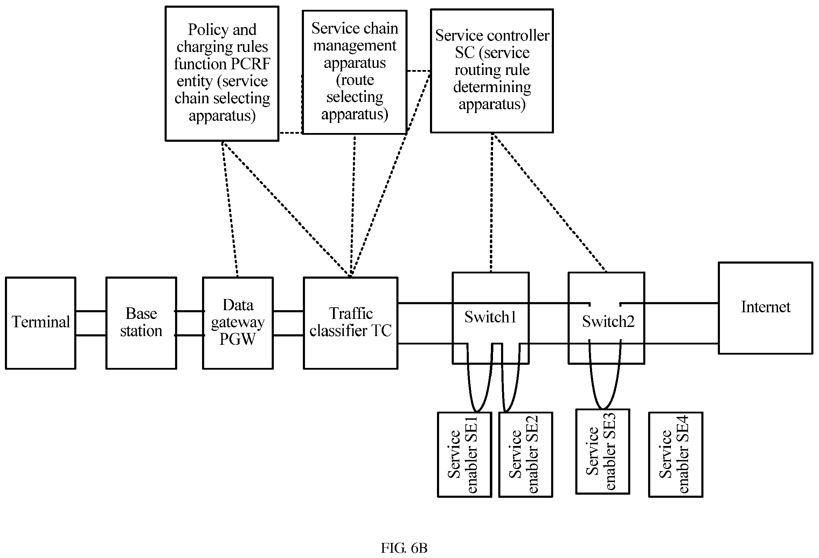

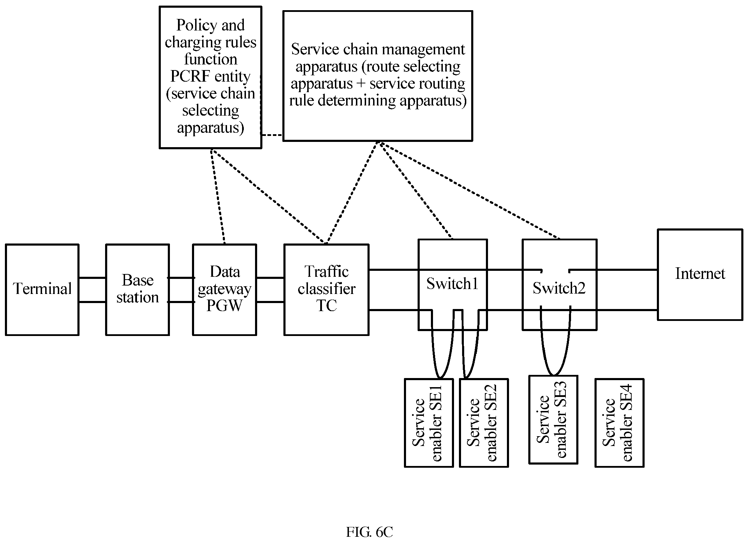

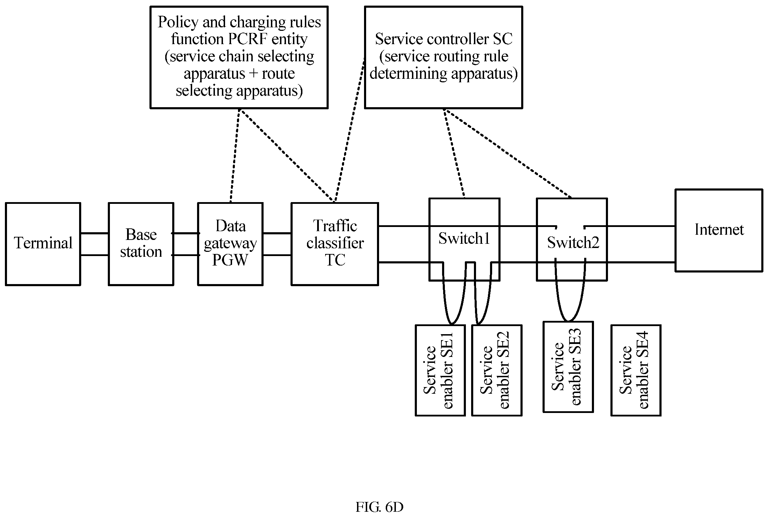

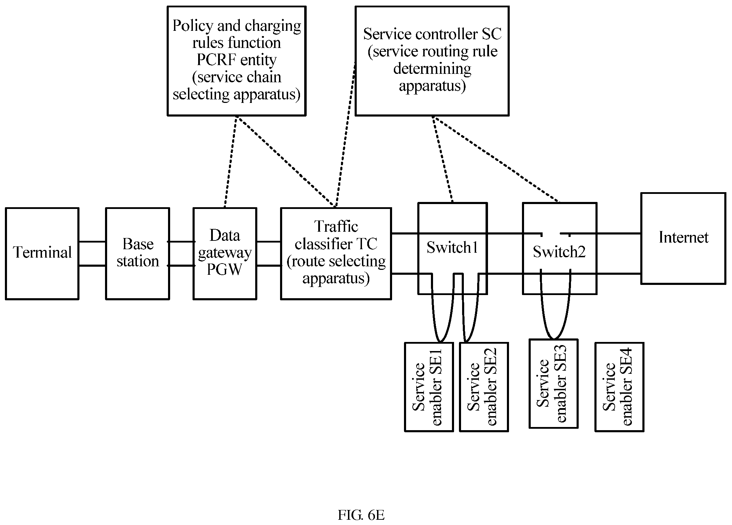

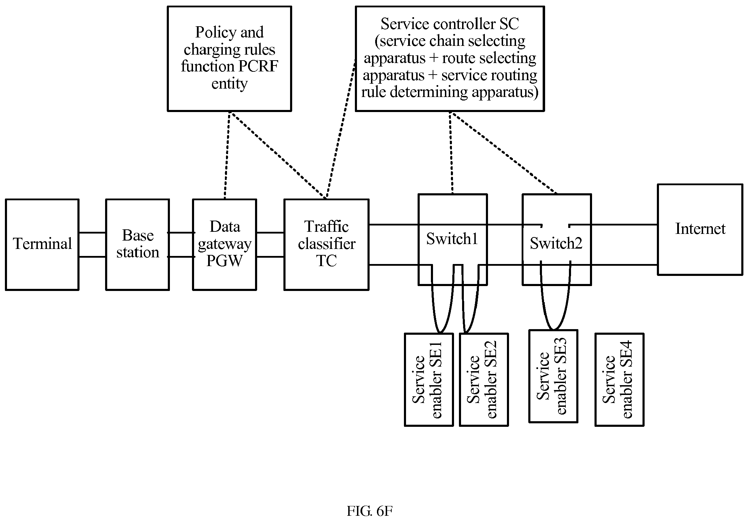

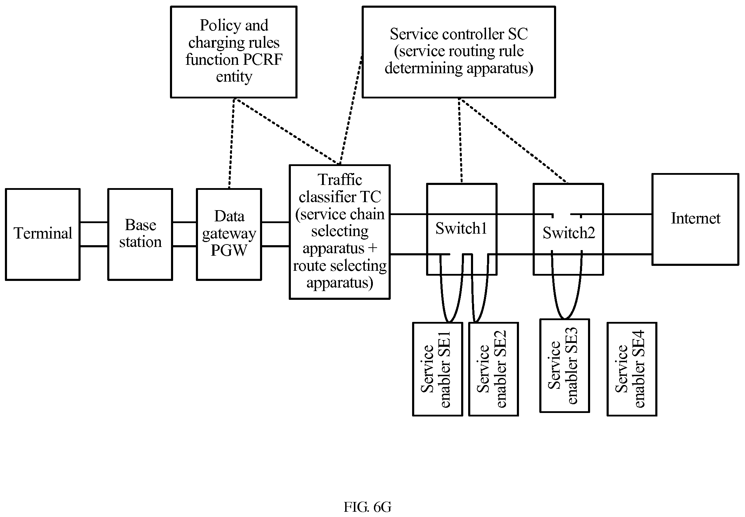

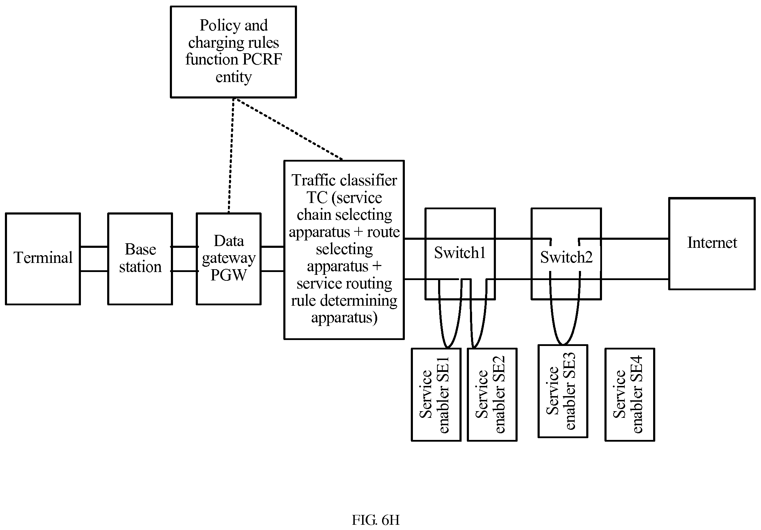

Referring to FIG. 5, an embodiment of the present invention provides a service routing system, including: a traffic classifier 20, a switch 30, a service chain selecting apparatus 40, a service route selecting apparatus 50, a service routing rule determining apparatus 60, and a service enabler 70. There are multiple switches and service enablers (in FIG. 6, only one switch and one service enabler are illustrated for description, and the others are not illustrated).

A routing process between devices and apparatuses in the system is as follows:
S300. The traffic classifier 20 parses a received data packet to obtain a service type of the data packet.

S305. The traffic classifier 20 sends the service type to the service chain selecting apparatus 40.

S310. The service chain selecting apparatus 40 obtains a service chain according to the service type and a correspondence between the service type and the service chain.

The service chain is used to describe service enabling processing that needs to be performed on the data packet.

S315. The service chain selecting apparatus 40 sends the service chain to the service route selecting apparatus 50.

The service chain selecting apparatus 40 may directly send the service chain to the service route selecting apparatus 50 or may indirectly send the service chain to the service route selecting apparatus 50 by using the traffic classifier 20. The traffic classifier 20 may send the service chain to the service route selecting apparatus in a signaling manner or may send the service chain to the service route selecting apparatus in a data manner.

S320. The service route selecting apparatus 50 determines a routing path according to the service chain.

This step may be specifically: The service route selecting apparatus 50 selects the service enabler according to the service enabling processing; and determines the routing path according to the service chain and information about the selected service enabler.

S325. The service route selecting apparatus 50 sends the routing path to the service routing rule determining apparatus 60.

S330. The service routing rule determining apparatus 60 generates a forwarding rule according to the routing path and establishes a correspondence between the forwarding rule and a service data routing label.

S335. The service routing rule determining apparatus 60 sends the correspondence between the forwarding rule and the service data routing label to the switch 30.

S340. The traffic classifier 20 obtains a service data routing label according to a correspondence between the service type and the service data routing label, where the service data routing label is used to identify a routing path, and the routing path is used to describe a network path for routing the data packet to a service enabler.

S345. The traffic classifier 20 attaches the data routing label to the data packet.

S350. The traffic classifier 20 sends the data packet to which the service data routing label is attached to the switch.

It should be noted that S345 and S350 do not need to be performed after step S340, and the two steps may be performed after S300.

S355. After acquiring the service data routing label attached to the data packet from the data packet, the switch 30 obtains the forwarding rule according to the service data routing label and the correspondence between the forwarding rule and the service data routing label.

S360. The switch forwards the data packet according to the forwarding rule.

S365. The service enabler 70 performs service enabling processing on the data packet.

In the prior art, service routing causes extremely heavy data traffic between a service enabler and a traffic classifier, leading to data processing overload on the traffic classifier; therefore, the traffic classifier becomes a bottleneck of data traffic processing. By contrast, in the service routing method provided in this embodiment of the present invention, a traffic classifier may attach, to a data packet, a data routing label used to identify a routing path, and send the data packet to which the data routing label is attached to a switch, so that the switch controls, according to the service data routing label, the data packet to be routed according to the routing path, thereby reducing data traffic of the traffic classifier and lightening load on the traffic classifier.

Referring to FIG. 6A, in another embodiment of a service routing system according to an embodiment of the present invention,
a service chain selecting apparatus is integrated into a PCRF, and a route selecting apparatus and a service routing rule determining apparatus are integrated into a service controller SC.

Uplink is used as an example. A terminal sends an uplink data packet to a network side, and the uplink data packet passes through a base station and a data gateway PGW and arrives at a traffic classifier TC.

The traffic classifier TC parses the received uplink data packet to obtain a service type of the data packet. It is assumed that the service type is a video service.

The traffic classifier TC sends the service type to the PCRF.

The PCRF obtains a service chain according to the service type and a correspondence between the service type and the service chain. It is assumed that a service chain descriptor is video optimization.

The PCRF sends the service chain to the service controller SC, and optionally sends a service data routing label. It is assumed that the service data routing label is a VLAN ID.

The SC determines a routing path according to the service chain. It is assumed that service enablers that the data packet needs to pass through are: SE1->SE2. It may be learned, according to connection relationships between service enablers SE1 and SE2 and another network element, that both SE1 and SE2 are connected to switch 1. Then, it may be determined that the routing path is: switch1->SE1->switch1->SE2->switch1->network device B.

The SC generates a forwarding rule according to the routing path and establishes a correspondence between the forwarding rule and the service data routing label. It may be determined according to the routing path that a group of forwarding rules is: switch1->SE1, SE1->switch1->SE2, SE2->switch1->network device B.

The SC sends the forwarding rule and the service data routing label to the switch.

The TC obtains the service data routing label according to a correspondence between the service type and the service data routing label. The service data routing label is used to identify a routing path, and the routing path is used to describe a network path for routing the data packet to a service enabler. If the PCRF does not send the service data routing label in the step of sending the service chain to the SC, the SC further needs to allocate a service data routing label at the time of determining the routing path according to the service chain, and also needs to send the allocated service data routing label to the PCRF; after receiving the service data routing label, the PCRF sends the service data routing label to the TC.

The TC attaches the data routing label to the uplink data packet.

The TC sends the uplink data packet to which the service data routing label is attached to switch 1.

After acquiring the service data routing label attached to the data packet from the uplink data packet, switch1 obtains the forwarding rules: switch1->SE1, SE1->switch1->SE2, and SE2->switch1->network device B according to the service data routing label VLAN ID and the correspondence between the service data routing label VLAN ID and the forwarding rule.

After receiving the data packet to which the VLAN ID is attached, switch1 finds the foregoing forwarding rules from the correspondence between a forwarding rule and a service data routing label according to the VLAN ID, that is, switch1->SE1, SE1->switch1->SE2, and SE2->switch1->network device B; then, sends the uplink data packet to SE1; after receiving a data packet that is sent by SE1 and to which the VLAN ID is attached, further sends the data packet to SE2; and after receiving a data packet that is sent by SE2 and to which the VLAN ID is attached, sends the data packet processed by SE2 to network device B.

FIG. 6A further describes a transmission process of a downlink data packet, and this process is opposite to uplink and is not described in detail herein.

FIG. 6A describes only one case in which a service chain selecting apparatus is integrated into a PCRF, and a route selecting apparatus and a service routing rule determining apparatus are integrated into an SC. In practice, there may be a case in which the service chain selecting apparatus is integrated into the service controller SC, a traffic classifier TC, a data gateway PGW, or a GGSN; a case in which the route selecting apparatus is integrated into any one of the policy and charging rules function PCRF entity, the traffic classifier TC, a service chain management SCM entity, the data gateway PGW, and the GGSN; and a case in which the service routing rule determining apparatus is integrated into any one of the policy and charging rules function PCRF entity, the traffic classifier TC, the service chain management SCM entity, the data gateway PGW, and the GGSN, which are not described in detail herein.

Referring to FIG. 6B, FIG. 6B is a schematic diagram of an improved routing system based on FIG. 6A.

In the routing system shown in FIG. 6B, a service chain selecting apparatus is deployed on a PCRF, a service route selecting apparatus is deployed on a service chain management (Service chain management) entity, and a service routing rule determining apparatus is deployed on an SC. However, regardless of which devices the service chain selecting apparatus, the service route selecting apparatus, and the service routing rule determining apparatus are integrated into, data routing principles are the same as those in the foregoing process.

Referring to FIG. 6C, FIG. 6C is a schematic diagram of an improved routing system based on FIG. 6A or FIG. 6B.

In the routing system shown in FIG. 6C, a service chain selecting apparatus is deployed on a PCRF, and a service route selecting apparatus and a service routing rule determining apparatus are deployed on a service chain management (Service chain management, SCM) entity. However, regardless of which devices the service chain selecting apparatus, the service route selecting apparatus, and the service routing rule determining apparatus are integrated into, data routing principles are the same as those in the foregoing process.

Referring to FIG. 6D, FIG. 6D is a schematic diagram of an improved routing system based on FIG. 6A.

In the routing system shown in FIG. 6D, a service chain selecting apparatus and a service route selecting apparatus are deployed on a PCRF, and a service routing rule determining apparatus is deployed on an SC controller. However, regardless of which devices the service chain selecting apparatus, the service route selecting apparatus, and the service routing rule determining apparatus are integrated into, data routing principles are the same as those in the foregoing process.

Referring to FIG. 6E, FIG. 6E is a schematic diagram of an improved routing system based on FIG. 6A.

In the routing system shown in FIG. 6E, a service chain selecting apparatus is deployed on a PCRF, a service route selecting apparatus is deployed on a TC, and a service routing rule determining apparatus is deployed on an SC controller. However, regardless of which devices the service chain selecting apparatus, the service route selecting apparatus, and the service routing rule determining apparatus are integrated into, data routing principles are the same as those in the foregoing process.

Referring to FIG. 6F, FIG. 6F is a schematic diagram of an improved routing system based on FIG. 6A.

In the routing system shown in FIG. 6F, a service chain selecting apparatus, a service route selecting apparatus, and a service routing rule determining apparatus are deployed on an SC controller. However, regardless of which devices the service chain selecting apparatus, the service route selecting apparatus, and the service routing rule determining apparatus are integrated into, data routing principles are the same as those in the foregoing process.

Referring to FIG. 6G, FIG. 6G is a schematic diagram of an improved routing system based on FIG. 6A.

In the routing system shown in FIG. 6G, a service chain selecting apparatus and a service route selecting apparatus are deployed on a TC, and a service routing rule determining apparatus is deployed on an SC controller. However, regardless of which devices the service chain selecting apparatus, the service route selecting apparatus, and the service routing rule determining apparatus are integrated into, data routing principles are the same as those in the foregoing process.

Referring to FIG. 6H, FIG. 6H is a schematic diagram of an improved routing system based on FIG. 6A.

In the routing system shown in FIG. 6H, a service chain selecting apparatus, a service route selecting apparatus, and a service routing rule determining apparatus are deployed on a TC. However, regardless of which devices the service chain selecting apparatus, the service route selecting apparatus, and the service routing rule determining apparatus are integrated into, data routing principles are the same as those in the foregoing process.

In the foregoing, FIG. 6A to FIG. 6H enumerate only some application scenarios in the system shown in FIG. 2 to FIG. 5, and cannot enumerate all application scenarios. Any routing process completed by using a solution of the method shown in FIG. 1 and the system shown in FIG. 2 to FIG. 5 shall fall within the protection scope of the present invention.

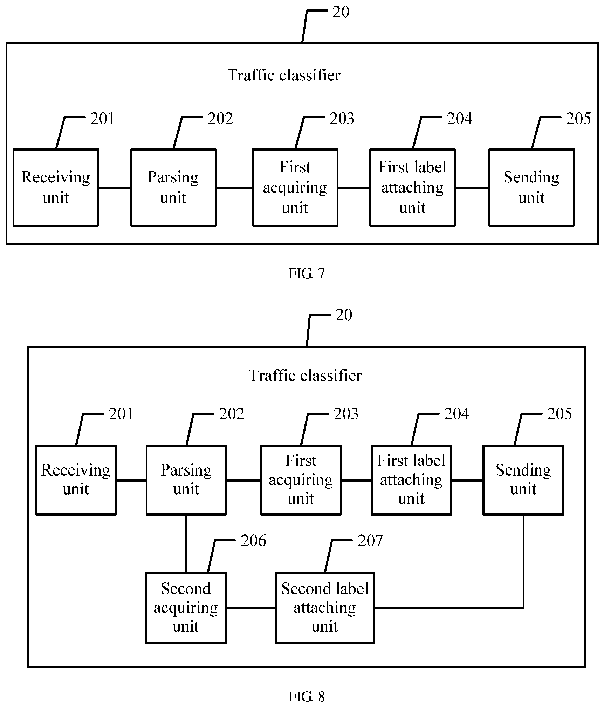

Referring to FIG. 7, FIG. 7 is a schematic diagram of an embodiment of a traffic classifier according to an embodiment of the present invention. The traffic classifier shown in FIG. 7 may implement a function of the traffic classifier described in FIG. 2 to FIG. 5. An embodiment of the traffic classifier according to this embodiment of the present invention includes:
a receiving unit 201, configured to receive a data packet;
a parsing unit 202, configured to parse the data packet received by the receiving unit 201, to obtain a service type of the data packet;
a first acquiring unit 203, configured to obtain a service data routing label according to a correspondence between the service data routing label and the service type that is parsed out by the parsing unit 202, where the service data routing label is used to identify a routing path, the routing path is used to describe a network path for routing the data packet to a service enabler according to a first sequence, and the first sequence is a sequence of service enablers to which the data packet is routed successively;
a first label attaching unit 204, configured to attach the data routing label acquired by the first acquiring unit 203 to the data packet; and
a sending unit 205, configured to send, to a switch, the data packet to which the first label attaching unit attaches the data routing label, so that the switch controls, according to the service data routing label attached to the data packet, the data packet to be routed according to the routing path.

Referring to FIG. 8, in another embodiment of the traffic classifier according to this embodiment of the present invention, the traffic classifier 20 further includes:
a second acquiring unit 206, configured to obtain a service status of a user service corresponding to the service type parsed out by the parsing unit 202, where the service status includes a newly initiated service or an ongoing service; and
a second label attaching unit 207, configured to attach, to a data packet of the service, a service data routing label corresponding to the service status acquired by the second acquiring unit 206.

Based on the foregoing embodiment corresponding to FIG. 8, in another embodiment of the traffic classifier according to this embodiment of the present invention,
the second label attaching unit 207 is configured to:
if the service status is a newly initiated service, attach a new service data routing label to a data packet of the service; or,
if the service status is an ongoing service, attach the service data routing label to a data packet of the service.

The traffic classifier provided in this embodiment of the present invention may attach, to a data packet, a data routing label used to identify a routing path; and send the data packet to which the data routing label is attached to a switch, so that the switch controls, according to the service data routing label, the data packet to be routed according to the routing path, thereby reducing data traffic of the traffic classifier and lightening load on the traffic classifier.

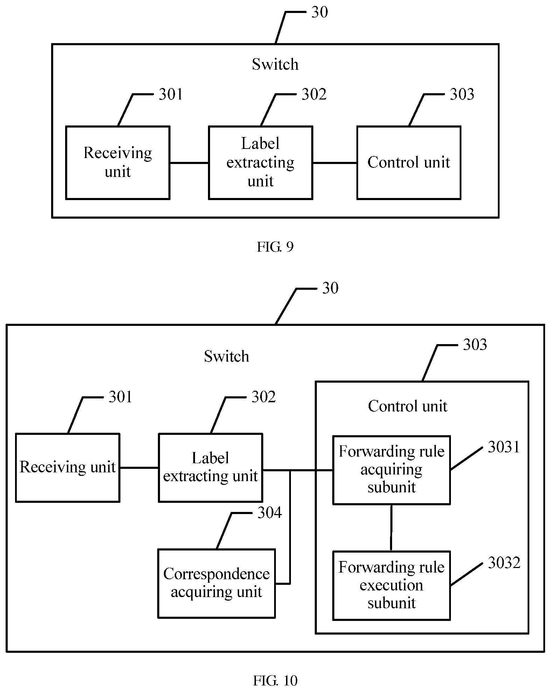

Referring to FIG. 9, FIG. 9 is a schematic diagram of an embodiment of a switch according to an embodiment of the present invention. The switch shown in FIG. 9 may implement a function of the switch described in FIG. 2 to FIG. 5. An embodiment of the switch according to this embodiment of the present invention includes:
a receiving unit 301, configured to receive a data packet that is sent by a traffic classifier and to which a service data routing label is attached, where the service data routing label is used to identify a routing path, and the routing path is used to describe a network path for routing the data packet to a service enabler;
a label extracting unit 302, configured to extract the service data routing label from the data packet received by the receiving unit 301; and
a control unit 303, configured to control, according to the service data routing label extracted by the label extracting unit 302, the data packet to be routed according to the routing path.

Referring to FIG. 10, in another embodiment of the switch according to this embodiment of the present invention, the switch 30 further includes:
a correspondence acquiring unit 304, configured to acquire a correspondence between a forwarding rule and the service data routing label, where the forwarding rule is generated according to the routing path and is used to control the data packet to be routed according to the routing path; and
the control unit 303 includes a forwarding rule acquiring subunit 3031 and a forwarding rule execution subunit 3032, where
the forwarding rule acquiring subunit 3031 is configured to obtain the forwarding rule according to the service data routing label extracted by the label extracting unit 302 and the correspondence, acquired by the correspondence acquiring unit 304, between the forwarding rule and the service data routing label; and
the forwarding rule execution subunit 3032 is configured to forward the data packet according to the forwarding rule.

After receiving a data packet to which a service data routing label is attached, the switch provided in this embodiment of the present invention may perform matching to find, in a forwarding rule according to the service data routing label, a forwarding path corresponding to the service data routing label; and then complete service enabling processing on the data packet according to the forwarding path, thereby reducing data traffic of a traffic classifier and lightening load on the traffic classifier.

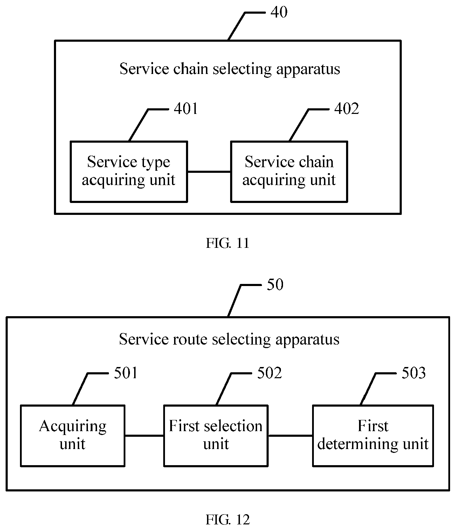

Referring to FIG. 11, FIG. 11 is a schematic diagram of an embodiment of a service chain selecting apparatus according to an embodiment of the present invention. The service chain selecting apparatus shown in FIG. 11 may implement a function of the service chain selecting apparatus described in FIG. 2 to FIG. 5. An embodiment of the service chain selecting apparatus according to this embodiment of the present invention includes:
a service type acquiring unit 401, configured to acquire a service type of a data packet; and
a service chain acquiring unit 402, configured to obtain a service chain according to the service type acquired by the service type acquiring unit 401 and a correspondence between the service type and the service chain, where the service chain is used to describe service enabling processing that needs to be performed on the data packet.

Based on the foregoing embodiment corresponding to FIG. 11, in another embodiment of the service chain selecting apparatus according to this embodiment of the present invention,
the service chain acquiring unit 402 is configured to obtain the service chain according to user service information and a correspondence between the user service information and the service chain, where the user service information includes the service type and subscription information of a user to whom the data packet belongs.

The service chain selecting apparatus is integrated into any one of a policy and charging rules function PCRF entity, a service controller SC, a traffic classifier TC, a data gateway PGW, and a GGSN.

The service chain selecting apparatus provided in this embodiment of the present invention may determine a service chain corresponding to a service type according to the service type of a data packet. Because the service chain describes service enabling processing that the data packet needs to undergo in sequence, the service chain may help determine a routing path. Therefore, a switch may obtain a specific forwarding rule, implementing that the switch routes the data packet, thereby reducing data traffic of a traffic classifier and lightening load on the traffic classifier.

Referring to FIG. 12, FIG. 12 is a schematic diagram of an embodiment of a service route selecting apparatus according to an embodiment of the present invention. The service route selecting apparatus shown in FIG. 12 may implement a function of the service route selecting apparatus described in FIG. 2 to FIG. 5. An embodiment of the service route selecting apparatus according to this embodiment of the present invention includes:
an acquiring unit 501, configured to acquire a service chain, where the service chain is used to describe service enabling processing that needs to be performed on a data packet;
a first selection unit 502, configured to select a service enabler according to the service enabling processing in the service chain acquired by the acquiring unit 501; and
a first determining unit 503, configured to determine a routing path according to the service chain and information about the service enabler selected by the first selection unit 502, where the routing path is used to describe a network path for routing the data packet to the service enabler.

Based on the foregoing embodiment corresponding to FIG. 12, in another embodiment of the service route selecting apparatus according to this embodiment of the present invention,
the first selection unit 502 is configured to select the service enabler according to the service enabling processing and a weighting factor of the service enabler, where the weighting factor includes a priority or load.

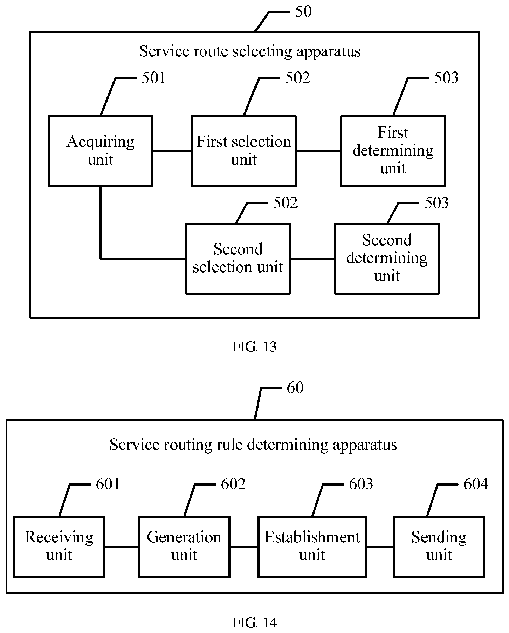

Optionally, based on the foregoing embodiment corresponding to FIG. 12, referring to FIG. 13, in another embodiment of the service route selecting apparatus according to this embodiment of the present invention, the service route selecting apparatus further includes:
a second selection unit 504, configured to: when the service enabler is overloaded, select a new service enabler according to the service enabling processing; and
a second determining unit 505, configured to determine a new routing path according to the service chain and the new service enabler that is selected by the second selection unit 504, and associate a service type of the data packet with the new routing path.

Optionally, based on the foregoing embodiment corresponding to FIG. 13, in another embodiment of the service route selecting apparatus according to this embodiment of the present invention,
the second determining unit 505 is configured to allocate a new service data routing label, where the new service data routing label identifies the new routing path; and associate the new service data routing label with the service type.

The service route selecting apparatus is integrated into any one of a policy and charging rules function PCRF entity, a service controller SC, a traffic classifier TC, a data gateway PGW, and a GGSN.

The service route selecting apparatus provided in this embodiment of the present invention may select a service enabler and determine a routing path according to a service chain determined by a service chain selecting apparatus, so that a switch can obtain a specific forwarding rule, implementing that the switch routes a data packet, thereby reducing data traffic of a traffic classifier and lightening load on the traffic classifier.

Referring to FIG. 14, FIG. 14 is a schematic diagram of an embodiment of a service routing rule determining apparatus according to an embodiment of the present invention. The service routing rule determining apparatus shown in FIG. 14 may implement a function of the service routing rule determining apparatus described in FIG. 2 to FIG. 5. An embodiment of the service routing rule determining apparatus according to this embodiment of the present invention includes:
an acquiring unit 601, configured to acquire a routing path, where the routing path is used to describe a network path for routing a data packet to a service enabler;
a generation unit 602, configured to generate a forwarding rule according to the routing path acquired by the acquiring unit 601, so as to control, by using the forwarding rule, the data packet to be routed according to the routing path;
an establishment unit 603, configured to establish a correspondence between the forwarding rule generated by the generation unit 602 and a service data routing label, where the service data routing label is used to identify the routing path; and
a sending unit 604, configured to send the correspondence, established by the establishment unit 603, between the forwarding rule and the service data routing label to the switch.

The service routing rule determining apparatus is integrated into any one of a policy and charging rules function PCRF entity, a service controller SC, a traffic classifier TC, a data gateway PGW, and a GGSN.

The service routing rule determining apparatus provided in this embodiment of the present invention may generate a forwarding rule according to a routing path determined by a service route selecting apparatus, so that a switch can obtain a specific forwarding rule, implementing that the switch routes a data packet, thereby reducing data traffic of a traffic classifier and lightening load on the traffic classifier.

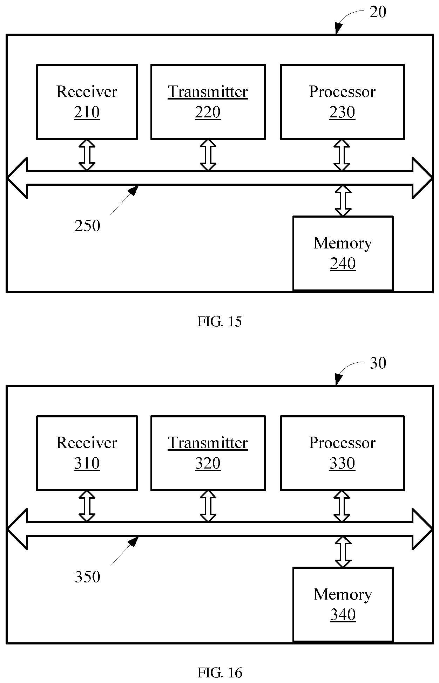

FIG. 15 is a schematic structural diagram of a traffic classifier 20 according to an embodiment of the present invention. In addition, the traffic classifier shown in FIG. 15 is another implementation manner of the traffic classifier shown in FIG. 7. The traffic classifier shown in FIG. 15 may also implement a function of the traffic classifier in FIG. 2 to FIG. 5. The traffic classifier 20 may include a receiver 210, a transmitter 220, a processor 230, and a memory 240.

The memory 240 may include a read-only memory and a random access memory, and provides an instruction and data to the processor 230. A part of the memory 240 may further include a non-volatile random access memory (NVRAM).

The memory 240 stores the following elements: an executable module or a data structure, a subset of an executable module or a data structure, or an extended set of an executable module or a data structure;
operating instructions, including various operating instructions, which are used to implement various operations; and
an operating system, including various system programs, which are used to implement various basic services and process hardware-based tasks.

In this embodiment of the present invention, the processor 230 executes the following operation by invoking an operating instruction stored in the memory 240 (the operating instruction may be stored in the operating system):
receive a data packet by using the receiver 210, and obtain a service data routing label according to a correspondence between a service type and the service data routing label, where the service data routing label is used to identify a routing path, and the routing path is used to describe a network path for routing the data packet to a service enabler; and attach the data routing label to the data packet, and send the data packet to a switch by using the transmitter 220, so that the switch controls, according to the service data routing label attached to the data packet, the data packet to be routed according to the routing path.

The traffic classifier 20 in this embodiment of the present invention may attach, to a data packet, a data routing label used to identify a routing path; and send the data packet to which the data routing label is attached to a switch, so that the switch controls, according to the service data routing label, the data packet to be routed according to the routing path, thereby reducing data traffic of the traffic classifier and lightening load on the traffic classifier.

The processor 230 controls an operation of the traffic classifier 20, and the processor 230 may further be referred to as a CPU (Central Processing Unit, central processing unit). The memory 240 may include a read-only memory and a random access memory, and provides an instruction and data to the processor 230. A part of the memory 240 may further include a non-volatile random access memory (NVRAM). In specific application, all components of the traffic classifier 20 are coupled together by using a bus system 250, where the bus system 250 may include a power bus, a control bus, a status signal bus, and the like in addition to a data bus. However, for clear description, various types of buses in the figure are marked as the bus system 250.

The methods disclosed in the foregoing embodiments of the present invention may be applied to the processor 230, or implemented by the processor 230. The processor 230 may be an integrated circuit chip and has a signal processing capability. In an implementation process, the steps in the foregoing methods may be completed by means of an integrated logic circuit of hardware in the processor 230 or an instruction in a form of software. The foregoing processor 230 may be a general purpose processor, a digital signal processor (DSP), an application-specific integrated circuit (ASIC), a field programmable gate array (FPGA) or another programmable logical device, a discrete gate or transistor logical device, or a discrete hardware component. The processor 230 may implement or execute methods, steps and logical block diagrams disclosed in the embodiments of the present invention. The general purpose processor may be a microprocessor or the processor may be any conventional processor and the like. Steps of the methods disclosed with reference to the embodiments of the present invention may be directly executed and completed by means of a hardware decoding processor, or may be executed and completed by using a combination of hardware and software modules in a decoding processor. The software module may be located in a mature storage medium in the field, such as a random access memory, a flash memory, a read-only memory, a programmable read-only memory, an electrically-erasable programmable memory, or a register. The storage medium is located in the memory 240, and the processor 230 reads information in the memory 240 and completes the steps in the foregoing methods in combination with hardware of the processor.

Optionally, the processor 230 may further obtain a service status of a user service corresponding to the service type, where the service status includes a newly initiated service or an ongoing service; and attach, to a data packet of the service, a service data routing label corresponding to the service status.

Optionally, the processor 230 may be configured to:
if the service status is a newly initiated service, attach a new service data routing label to a data packet of the service; or,
if the service status is an ongoing service, attach the service data routing label to a data packet of the service.

The traffic classifier provided in this embodiment of the present invention may attach, to a data packet, a data routing label used to identify a routing path; and send the data packet to which the data routing label is attached to a switch, so that the switch controls, according to the service data routing label, the data packet to be routed according to the routing path, thereby reducing data traffic of the traffic classifier and lightening load on the traffic classifier.

FIG. 16 is a schematic structural diagram of a switch 30 according to an embodiment of the present invention. In addition, the switch shown in FIG. 16 is another implementation manner of the switch shown in FIG. 9, and the switch shown in FIG. 16 may also implement a function of the switch in FIG. 2 to FIG. 5. The switch 30 may include a receiver 310, a transmitter 320, a processor 330, and a memory 340.

The memory 340 may include a read-only memory and a random access memory, and provides an instruction and data to the processor 330. A part of the memory 340 may further include a non-volatile random access memory (NVRAM).

The memory 340 stores the following elements: an executable module or a data structure, a subset of an executable module or a data structure, or an extended set of an executable module or a data structure;
operating instructions, including various operating instructions, which are used to implement various operations; and
an operating system, including various system programs, which are used to implement various basic services and process hardware-based tasks.

In this embodiment of the present invention, the processor 330 executes the following operation by invoking an operating instruction stored in the memory 340 (the operating instruction may be stored in the operating system):
receive, by using the receiver 310, a data packet that is sent by a traffic classifier and to which a service data routing label is attached, where the service data routing label is used to identify a routing path, and the routing path is used to describe a network path for routing the data packet to a service enabler; and extract the service data routing label from the data packet, and control, according to the extracted service data routing label, the data packet to be routed according to the routing path.

The processor 330 controls an operation of the switch 30, and the processor 330 may further be referred to as a CPU (Central Processing Unit, central processing unit). The memory 340 may include a read-only memory and a random access memory, and provides an instruction and data to the processor 330. A part of the memory 340 may further include a non-volatile random access memory (NVRAM). In specific application, all components of the switch 30 are coupled together by using a bus system 350, where the bus system 350 may include a power bus, a control bus, a status signal bus, and the like in addition to a data bus. However, for clear description, various types of buses in the figure are marked as the bus system 350.

The methods disclosed in the foregoing embodiments of the present invention may be applied to the processor 330, or implemented by the processor 330. The processor 330 may be an integrated circuit chip and has a signal processing capability. In an implementation process, the steps in the foregoing methods may be completed by means of an integrated logic circuit of hardware in the processor 330 or an instruction in a form of software. The foregoing processor 330 may be a general purpose processor, a digital signal processor (DSP), an application-specific integrated circuit (ASIC), a field programmable gate array (FPGA) or another programmable logical device, a discrete gate or transistor logical device, or a discrete hardware component. The processor 330 may implement or execute methods, steps and logical block diagrams disclosed in the embodiments of the present invention. The general purpose processor may be a microprocessor or the processor may be any conventional processor and the like. Steps of the methods disclosed with reference to the embodiments of the present invention may be directly executed and completed by means of a hardware decoding processor, or may be executed and completed by using a combination of hardware and software modules in a decoding processor. The software module may be located in a mature storage medium in the field, such as a random access memory, a flash memory, a read-only memory, a programmable read-only memory, an electrically-erasable programmable memory, or a register. The storage medium is located in the memory 340, and the processor 330 reads information in the memory 340 and completes the steps in the foregoing methods in combination with hardware of the processor.

Optionally, the receiver 310 is further configured to acquire a correspondence between a forwarding rule and the service data routing label, where the forwarding rule is generated according to the routing path and is used to control the data packet to be routed according to the routing path; and
the processor 330 is further configured to obtain the forwarding rule according to the extracted service data routing label and the received correspondence between the forwarding rule and the service data routing label; and
forward the data packet according to the forwarding rule by using the transmitter 320.

After receiving a data packet to which a service data routing label is attached, the switch provided in this embodiment of the present invention may perform matching to find, in a forwarding rule according to the service data routing label, a forwarding path corresponding to the service data routing label; and then complete service enabling processing on the data packet according to the forwarding path, thereby reducing data traffic of a traffic classifier and lightening load on the traffic classifier.

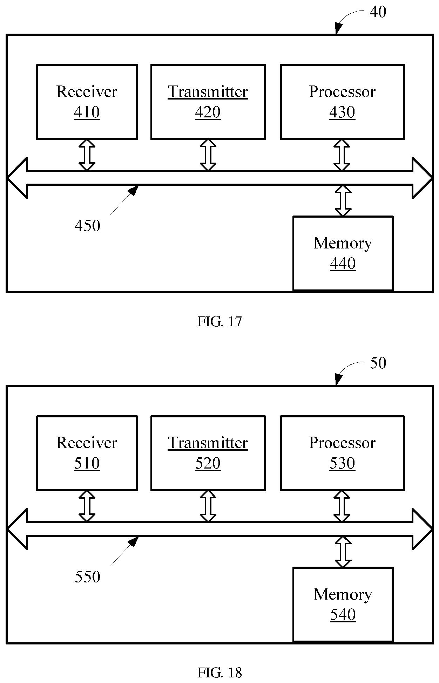

FIG. 17 is a schematic structural diagram of a service chain selecting apparatus 40 according to an embodiment of the present invention. In addition, the service chain selecting apparatus shown in FIG. 17 is another implementation manner of the service chain selecting apparatus shown in FIG. 11, and the service chain selecting apparatus shown in FIG. 17 may also implement a function of the service chain selecting apparatus in FIG. 2 to FIG. 5. The service chain selecting apparatus 40 may include a receiver 410, a transmitter 420, a processor 430, and a memory 440.

The memory 440 may include a read-only memory and a random access memory, and provides an instruction and data to the processor 430. A part of the memory 440 may further include a non-volatile random access memory (NVRAM).

The memory 440 stores the following elements: an executable module or a data structure, a subset of an executable module or a data structure, or an extended set of an executable module or a data structure;
operating instructions, including various operating instructions, which are used to implement various operations; and
an operating system, including various system programs, which are used to implement various basic services and process hardware-based tasks.

In this embodiment of the present invention, the processor 430 executes the following operation by invoking an operating instruction stored in the memory 440 (the operating instruction may be stored in the operating system):
acquire, by using the receiver 410, a service type of a data packet, and obtain a service chain according to the service type and a correspondence between the service type and the service chain, where the service chain is used to describe service enabling processing that needs to be performed on the data packet.

The processor 430 controls an operation of the service chain selecting apparatus 40, and the processor 430 may further be referred to as a CPU (Central Processing Unit, central processing unit). The memory 440 may include a read-only memory and a random access memory, and provides an instruction and data to the processor 430. A part of the memory 440 may further include a non-volatile random access memory (NVRAM). In specific application, all components of the service chain selecting apparatus 40 are coupled together by using a bus system 450, where the bus system 450 may include a power bus, a control bus, a status signal bus, and the like in addition to a data bus. However, for clear description, various types of buses in the figure are marked as the bus system 450.

The methods disclosed in the foregoing embodiments of the present invention may be applied to the processor 430, or implemented by the processor 430. The processor 430 may be an integrated circuit chip and has a signal processing capability. In an implementation process, the steps in the foregoing methods may be completed by means of an integrated logic circuit of hardware in the processor 430 or an instruction in a form of software. The foregoing processor 430 may be a general purpose processor, a digital signal processor (DSP), an application-specific integrated circuit (ASIC), a field programmable gate array (FPGA) or another programmable logical device, a discrete gate or transistor logical device, or a discrete hardware component. The processor 430 may implement or execute methods, steps and logical block diagrams disclosed in the embodiments of the present invention. The general purpose processor may be a microprocessor or the processor may be any conventional processor and the like. Steps of the methods disclosed with reference to the embodiments of the present invention may be directly executed and completed by means of a hardware decoding processor, or may be executed and completed by using a combination of hardware and software modules in a decoding processor. The software module may be located in a mature storage medium in the field, such as a random access memory, a flash memory, a read-only memory, a programmable read-only memory, an electrically-erasable programmable memory, or a register. The storage medium is located in the memory 440, and the processor 430 reads information in the memory 440 and completes the steps in the foregoing methods in combination with hardware of the processor.

Optionally, the processor 430 obtains the service chain according to user service information and a correspondence between the user service information and the service chain, where the user service information includes the service type and subscription information of a user to whom the data packet belongs.

The service chain selecting apparatus provided in this embodiment of the present invention may determine a service chain corresponding to a service type according to the service type of a data packet. Because the service chain describes service enabling processing that the data packet needs to undergo in sequence, the service chain may help determine a routing path. Therefore, a switch may obtain a specific forwarding rule, implementing that the switch routes the data packet, thereby reducing data traffic of a traffic classifier and lightening load on the traffic classifier.

FIG. 18 is a schematic structural diagram of a service route selecting apparatus 50 according to an embodiment of the present invention. In addition, the service route selecting apparatus shown in FIG. 18 is another implementation manner of the service route selecting apparatus shown in FIG. 12, and the service route selecting apparatus shown in FIG. 18 may also implement a function of the service route selecting apparatus in FIG. 2 to FIG. 5. The service route selecting apparatus 50 may include a receiver 510, a transmitter 520, a processor 530, and a memory 540.

The memory 540 may include a read-only memory and a random access memory, and provides an instruction and data to the processor 530. A part of the memory 540 may further include a non-volatile random access memory (NVRAM).

The memory 540 stores the following elements: an executable module or a data structure, a subset of an executable module or a data structure, or an extended set of an executable module or a data structure;
operating instructions, including various operating instructions, which are used to implement various operations; and
an operating system, including various system programs, which are used to implement various basic services and process hardware-based tasks.

In this embodiment of the present invention, the processor 530 executes the following operations by invoking an operating instruction stored in the memory 540 (the operating instruction may be stored in the operating system):
acquire a service chain by using the receiver 510, where the service chain is used to describe service enabling processing that needs to be performed on a data packet; and
select a service enabler according to the service enabling processing in the service chain, and determine a routing path according to the service chain and information about the service enabler, where the routing path is used to describe a network path for routing the data packet to the service enabler.

The processor 530 controls an operation of the service route selecting apparatus 50, and the processor 530 may further be referred to as a CPU (Central Processing Unit, central processing unit). The memory 540 may include a read-only memory and a random access memory, and provides an instruction and data to the processor 530. A part of the memory 540 may further include a non-volatile random access memory (NVRAM). In specific application, all components of the service route selecting apparatus 50 are coupled together by using a bus system 550, where the bus system 550 may include a power bus, a control bus, a status signal bus, and the like in addition to a data bus. However, for clear description, various types of buses in the figure are marked as the bus system 550.

The methods disclosed in the foregoing embodiments of the present invention may be applied to the processor 530, or implemented by the processor 530. The processor 530 may be an integrated circuit chip and has a signal processing capability. In an implementation process, the steps in the foregoing methods may be completed by means of an integrated logic circuit of hardware in the processor 530 or an instruction in a form of software. The foregoing processor 530 may be a general purpose processor, a digital signal processor (DSP), an application-specific integrated circuit (ASIC), a field programmable gate array (FPGA) or another programmable logical device, a discrete gate or transistor logical device, or a discrete hardware component. The processor 530 may implement or execute methods, steps and logical block diagrams disclosed in the embodiments of the present invention. The general purpose processor may be a microprocessor or the processor may be any conventional processor and the like. Steps of the methods disclosed with reference to the embodiments of the present invention may be directly executed and completed by means of a hardware decoding processor, or may be executed and completed by using a combination of hardware and software modules in a decoding processor. The software module may be located in a mature storage medium in the field, such as a random access memory, a flash memory, a read-only memory, a programmable read-only memory, an electrically-erasable programmable memory, or a register. The storage medium is located in the memory 540, and the processor 530 reads information in the memory 540 and completes the steps in the foregoing methods in combination with hardware of the processor.

Optionally, the processor 530 is configured to select the service enabler according to the service enabling processing and a weighting factor of the service enabler, where the weighting factor includes a priority or load.

Optionally, the processor 530 is further configured to: when the service enabler is overloaded, select a new service enabler according to the service enabling processing, determine a new routing path according to the service chain and the new service enabler, and associate a service type of the data packet with the new routing path.

Optionally, the processor 530 is configured to allocate a new service data routing label, where the new service data routing label identifies the new routing path; and associate the new service data routing label with the service type.

The service route selecting apparatus provided in this embodiment of the present invention may select a service enabler and determine a routing path according to a service chain determined by a service chain selecting apparatus, so that a switch can obtain a specific forwarding rule, implementing that the switch routes a data packet, thereby reducing data traffic of a traffic classifier and lightening load on the traffic classifier.

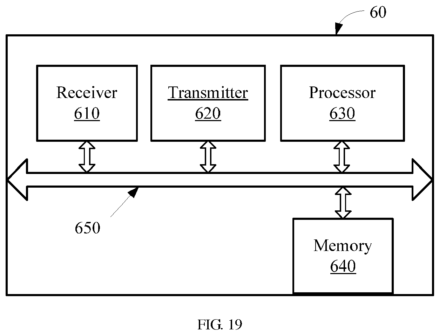

FIG. 19 is a schematic structural diagram of a service routing rule determining apparatus 60 according to an embodiment of the present invention. In addition, the service routing rule determining apparatus shown in FIG. 19 is another implementation manner of the service routing rule determining apparatus shown in FIG. 14, and the service routing rule determining apparatus shown in FIG. 19 may also implement a function of the service routing rule determining apparatus in FIG. 2 to FIG. 5. The service routing rule determining apparatus 60 may include a receiver 610, a transmitter 620, a processor 630, and a memory 640.

The memory 640 may include a read-only memory and a random access memory, and provides an instruction and data to the processor 630. A part of the memory 640 may further include a non-volatile random access memory (NVRAM).

The memory 640 stores the following elements: an executable module or a data structure, a subset of an executable module or a data structure, or an extended set of an executable module or a data structure;
operating instructions, including various operating instructions, which are used to implement various operations; and
an operating system, including various system programs, which are used to implement various basic services and process hardware-based tasks.

In this embodiment of the present invention, the processor 630 executes the following operations by invoking an operating instruction stored in the memory 640 (the operating instruction may be stored in the operating system):
acquire a routing path by using the receiver 610, where the routing path is used to describe a network path for routing a data packet to a service enabler;
the processor 630 is configured to generate a forwarding rule according to the routing path, so as to control, by using the forwarding rule, the data packet to be routed according to the routing path; and establish a correspondence between the forwarding rule and a service data routing label, where the service data routing label is used to identify the routing path; and
the transmitter 620 is configured to send the correspondence between the forwarding rule and the service data routing label to the switch.

The processor 630 controls an operation of the service routing rule determining apparatus 60, and the processor 630 may further be referred to as a CPU (Central Processing Unit, central processing unit). The memory 640 may include a read-only memory and a random access memory, and provides an instruction and data to the processor 630. A part of the memory 640 may further include a non-volatile random access memory (NVRAM). In specific application, all components of the service routing rule determining apparatus 60 are coupled together by using a bus system 650, where the bus system 650 may include a power bus, a control bus, a status signal bus, and the like in addition to a data bus. However, for clear description, various types of buses in the figure are marked as the bus system 650.

The methods disclosed in the foregoing embodiments of the present invention may be applied to the processor 630, or implemented by the processor 630. The processor 630 may be an integrated circuit chip and has a signal processing capability. In an implementation process, the steps in the foregoing methods may be completed by means of an integrated logic circuit of hardware in the processor 630 or an instruction in a form of software. The foregoing processor 630 may be a general purpose processor, a digital signal processor (DSP), an application-specific integrated circuit (ASIC), a field programmable gate array (FPGA) or another programmable logical device, a discrete gate or transistor logical device, or a discrete hardware component. The processor 630 may implement or execute methods, steps and logical block diagrams disclosed in the embodiments of the present invention. The general purpose processor may be a microprocessor or the processor may be any conventional processor and the like. Steps of the methods disclosed with reference to the embodiments of the present invention may be directly executed and completed by means of a hardware decoding processor, or may be executed and completed by using a combination of hardware and software modules in a decoding processor. The software module may be located in a mature storage medium in the field, such as a random access memory, a flash memory, a read-only memory, a programmable read-only memory, an electrically-erasable programmable memory, or a register. The storage medium is located in the memory 640, and the processor 630 reads information in the memory 640 and completes the steps in the foregoing methods in combination with hardware of the processor.

The service routing rule determining apparatus provided in this embodiment of the present invention may generate a forwarding rule according to a routing path determined by a service route selecting apparatus, so that a switch can obtain a specific forwarding rule, implementing that the switch routes a data packet, thereby reducing data traffic of a traffic classifier and lightening load on the traffic classifier.

A person of ordinary skill in the art may understand that all or some of the steps of the methods in the embodiments may be implemented by a program instructing relevant hardware. The program may be stored in a computer-readable storage medium. The storage medium may include: a ROM, a RAM, a magnetic disk, or an optical disc.

The foregoing provides detailed description of the service routing method, device, and system provided in the embodiments of the present invention. In this specification, specific examples are used to describe the principle and implementation manners of the present invention, and the description of the embodiments is only intended to help understand the method and core idea of the present invention. Meanwhile, a person of ordinary skill in the art may, based on the idea of the present invention, make modifications with respect to the specific implementation manners and the application scope. In conclusion, the content of this specification shall not be construed as a limitation to the present invention.

## Claims

1. A service routing method, comprising:
parsing (101) a received data packet to obtain a service type of the data packet;
obtaining (102) a service data routing label according to a correspondence between the service type and the service data routing label, wherein the service data routing label is used to identify a routing path, and the routing path is used to describe a network path for routing the data packet to a service enabler;
attaching (103) the service data routing label to the data packet; and
sending (104) the data packet to a switch, so that the switch controls, according to the service data routing label attached to the data packet, the data packet to be routed according to the routing path,
wherein the method further comprises:
obtaining a service chain according to the service type and a correspondence between the service type and the service chain, wherein the service chain is used to describe service enabling processing that needs to be performed on the data packet;
selecting the service enabler according to the service enabling processing; and
determining the routing path according to the service chain and information about the service enabler,
wherein the obtaining a service chain according to the service type and a correspondence between the service type and the service chain comprises:
obtaining the service chain according to user service information and a correspondence between the user service information and the service chain, wherein the user service information comprises the service type and subscription information of a user to whom the data packet belongs,
wherein the service chain is further used to describe the service enabling processing that the data packet needs to undergo in sequence,
wherein a description form of the service chain uses a service chain descriptor, where a service chain is described in a manner of a Url expression.

2. The method according to claim 1, wherein the selecting the service enabler according to the service enabling processing comprises:
selecting the service enabler according to the service enabling processing and a weighting factor of the service enabler, wherein the weighting factor comprises a priority or load.

3. The method according to claim 1 or 2, wherein the method further comprises:
generating a forwarding rule according to the routing path, so as to control, by using the forwarding rule, the data packet to be routed according to the routing path;
establishing a correspondence between the forwarding rule and the service data routing label; and
sending the correspondence between the forwarding rule and the service data routing label to the switch, so that after acquiring the service data routing label attached to the data packet from the data packet, the switch obtains the forwarding rule according to the service data routing label and the correspondence between the forwarding rule and the service data routing label, and forwards the data packet according to the forwarding rule.

4. A service routing system, comprising a traffic classifier (20) and a switch (30), wherein:
the traffic classifier (20) is configured to parse a received data packet to obtain a service type of the data packet; obtain a service data routing label according to a correspondence between the service type and the service data routing label, wherein the service data routing label is used to identify a routing path, and the routing path is used to describe a network path for routing the data packet to a service enabler; attach the service data routing label to the data packet; and send the data packet to the switch; and
the switch (30) is configured to control, according to the service data routing label attached to the data packet, the data packet to be routed according to the routing path,
wherein the system further comprises: a service chain selecting apparatus (40) and a service route selecting apparatus (50), wherein:
the service chain selecting apparatus (40) is configured to obtain a service chain according to the service type and a correspondence between the service type and the service chain, wherein the service chain is used to describe service enabling processing that needs to be performed on the data packet; and
the service route selecting apparatus (50) is configured to select the service enabler according to the service enabling processing; and determine the routing path according to the service chain and information about the selected service enabler,
wherein:
the service chain selecting apparatus is configured to obtain the service chain according to user service information and a correspondence between the user service information and the service chain, wherein the user service information comprises the service type and subscription information of a user to whom the data packet belongs,
wherein the service chain is further used to describe the service enabling processing that the data packet needs to undergo in sequence,
wherein a description form of the service chain uses a service chain descriptor, where a service chain is described in a manner of a Url expression.

5. The system according to claim 4, wherein:
the service route selecting apparatus (40) is configured to select the service enabler according to the service enabling processing and a weighting factor of the service enabler, wherein the weighting factor comprises a priority or load.

6. The system according to claim 4 or 5, wherein the system further comprises a service routing rule determining apparatus (60), wherein:
the service routing rule determining apparatus (60) is configured to generate a forwarding rule according to the routing path, so as to control, by using the forwarding rule, the data packet to be routed according to the routing path; establish a correspondence between the forwarding rule and the service data routing label; and send the correspondence between the forwarding rule and the service data routing label to the switch; and
the switch (30) is configured to: after acquiring the service data routing label attached to the data packet from the data packet, obtain the forwarding rule according to the service data routing label and the correspondence between the forwarding rule and the service data routing label, and forward the data packet according to the forwarding rule.

## Patentansprüche

1. Dienstroutingverfahren, umfassend:
Parsen (101) eines empfangenen Datenpakets, um einen Diensttyp des Datenpakets zu erhalten;
Erhalten (102) eines Dienstdaten-Routing-Labels gemäß einer Korrespondenz zwischen dem Diensttyp und dem Dienstdaten-Routing-Label, wobei das Dienstdaten-Routing-Label verwendet wird, um einen Routingpfad zu identifizieren, und der Routingpfad verwendet wird, um einen Netzwerkpfad zum Routing des Datenpakets zu einem Dienstfreigabegerät zu beschreiben;
Anbringen (103) des Dienstdaten-Routing-Labels am Datenpaket; und
Senden (104) des Datenpakets an einen "Switch", so dass der "Switch" gemäß dem an dem Datenpaket angebrachten Dienstdaten-Routing-Label das weiterzuleitende Datenpaket gemäß dem Routingpfad steuert,
wobei das Verfahren ferner umfasst:
Erhalten einer Dienstkette gemäß der dem Diensttyp und einer Korrespondenz zwischen dem Diensttyp und der Dienstkette, wobei die Dienstkette verwendet wird, um eine Dienstfreigabebearbeitung zu beschreiben, die an dem Datenpaket durchgeführt werden muss;
Auswählen des Dienstfreigabegeräts gemäß der Dienstfreigabebearbeitung; und
Bestimmen des Routingpfades gemäß der Dienstkette und Informationen über das Dienstfreigabegerät,
wobei das Erhalten einer Dienstkette gemäß dem Diensttyp und einer Korrespondenz zwischen dem Diensttyp und der Dienstkette umfasst:
Erhalten der Dienstkette gemäß den Benutzerdienstinformationen und einer Korrespondenz zwischen den Benutzerdienstinformationen und der Dienstkette, wobei die Benutzerdienstinformationen den Diensttyp und die Subskriptionsinformationen eines Benutzers umfassen, zu dem das Datenpaket gehört,
wobei die Dienstkette ferner verwendet wird, um die Dienstfreigabebearbeitung zu beschreiben, die das Datenpaket nacheinander durchlaufen muss,
wobei eine Beschreibungsform der Dienstkette einen Dienstkettendeskriptor verwendet, wobei eine Dienstkette in einer Weise eines URL-Ausdrucks beschrieben wird.

2. Verfahren nach Anspruch 1, wobei das Auswählen des Dienstfreigabegeräts gemäß der Dienstfreigabebearbeitung umfasst:
Auswählen des Dienstfreigabegeräts gemäß der Dienstfreigabebearbeitung und einem Gewichtungsfaktor des Dienstfreigabegeräts, wobei der Gewichtungsfaktor eine Priorität oder Last umfasst.

3. Verfahren nach Anspruch 1 oder 2, wobei das Verfahren ferner umfasst:
Erzeugen einer Weiterleitungsregel gemäß dem Routingpfad, um unter Verwendung der Weiterleitungsregel das weiterzuleitende Datenpaket gemäß dem Routingpfad zu steuern;
Herstellen einer Korrespondenz zwischen der Weiterleitungsregel und dem Dienstdaten-Routing-Label; und
Senden der Korrespondenz zwischen der Weiterleitungsregel und dem Dienstdaten-Routing-Label an den "Switch", so dass der "Switch" nach Erlangen des am Datenpaket angebrachten Dienstdaten-Routing-Labels aus dem Datenpaket die Weiterleitungsregel gemäß dem Dienstdaten-Routing-Label und die Korrespondenz zwischen der Weiterleitungsregel und dem Dienstdaten-Routing-Label erhält und das Datenpaket gemäß der Weiterleitungsregel weiterleitet.

4. Dienstroutingsystem, umfassend einen Verkehrsklassifizierer (20) und einen "Switch" (30), wobei: der Verkehrsklassifizierer (20) ausgelegt ist, um ein empfangenes Datenpaket zu parsen, um einen Diensttyp des Datenpakets zu erhalten; Erhalten eines Dienstdaten-Routing-Labels gemäß einer Korrespondenz zwischen dem Diensttyp und dem Dienstdaten-Routing-Label, wobei das Dienstdaten-Routing-Label verwendet wird, um einen Routingpfad zu identifizieren, und der Routingpfad verwendet wird, um einen Netzwerkpfad zum Leiten des Datenpakets zu einem Dienstfreigabegerät zu beschreiben; den Dienstdaten-Routing-Label an das Datenpaket anzubringen; und das Datenpaket an den "Switch" zu senden; und
der "Switch" (30) ausgelegt ist, um gemäß dem an dem Datenpaket angebrachten Dienstdaten-Routing-Label das weiterzuleitende Datenpaket gemäß dem Routingpfad zu steuern,
wobei das System ferner umfasst: eine Dienstketten-Auswahlvorrichtung (40) und eine Dienstrouting-Auswahlvorrichtung (50), wobei:
die Dienstketten-Auswahlvorrichtung (40) ausgelegt ist, um eine Dienstkette gemäß dem Diensttyp und einer Korrespondenz zwischen dem Diensttyp und der Dienstkette zu erhalten, wobei die Dienstkette verwendet wird, um eine Dienstfreigabebearbeitung zu beschreiben, die an dem Datenpaket durchgeführt werden muss; und
die Dienstrouting-Auswahlvorrichtung (50) ausgelegt ist, um das Dienstfreigabegerät gemäß der Dienstfreigabebearbeitung auszuwählen; und den Routingpfad gemäß der Dienstkette und Informationen über das ausgewählten Dienstfreigabegerät zu bestimmen,
wobei:
die Dienstketten-Auswahlvorrichtung ausgelegt ist, um die Dienstkette gemäß den Benutzerdienstinformationen und einer Korrespondenz zwischen den Benutzerdienstinformationen und der Dienstkette zu erhalten, wobei die Benutzerdienstinformationen den Diensttyp und die Subskriptionsinformationen eines Benutzers umfassen, zu dem das Datenpaket gehört,
wobei die Dienstkette ferner verwendet wird, um die Dienstfreigabebearbeitung zu beschreiben, die das Datenpaket nacheinander durchlaufen muss,
wobei eine Beschreibungsform der Dienstkette einen Dienstkettendeskriptor verwendet, wobei eine Dienstkette in einer Weise eines URL-Ausdrucks beschrieben wird.

5. System nach Anspruch 4, wobei:
die Dienstrouting-Auswahlvorrichtung (40) ausgelegt ist, um das Dienstfreigabegerät gemäß der Dienstfreigabebearbeitung und einem Gewichtungsfaktor des Dienstfreigabegeräts auszuwählen, wobei der Gewichtungsfaktor eine Priorität oder Last umfasst.

6. System nach Anspruch 4 oder 5, wobei das System ferner eine Vorrichtung (60) zum Bestimmen der Dienstroutingregel umfasst, wobei:
die Vorrichtung (60) zum Bestimmen der Dienstroutingregel ausgelegt ist, um eine Weiterleitungsregel gemäß dem Routingpfad zu erzeugen, um unter Verwendung der Weiterleitungsregel das weiterzuleitende Datenpaket gemäß dem Routingpfad zu steuern; eine Korrespondenz zwischen der Weiterleitungsregel und dem Dienstdaten-Routing-Label herzustellen; und die Korrespondenz zwischen der Weiterleitungsregel und dem Dienstdaten-Routing-Label an den "Switch" zu senden; und
der Schalter (30) ausgelegt ist, um: nach dem Erlangen des an dem Datenpaket angebrachten Dienstdaten-Routing-Labels aus dem Datenpaket die Weiterleitungsregel gemäß dem Dienstdaten-Routing-Label und der Korrespondenz zwischen der Weiterleitungsregel und dem Dienstdaten-Routing-Label zu erhalten und das Datenpaket gemäß der Weiterleitungsregel weiterzuleiten.

## Revendications

1. Procédé de routage de service, comprenant :
l'analyse (101) d'un paquet de données reçu pour obtenir un type de service du paquet de données ;
l'obtention (102) d'une étiquette de routage de données de service en fonction d'une correspondance entre le type de service et l'étiquette de routage de données de service, l'étiquette de routage de données de service étant utilisée pour identifier un chemin de routage, et le chemin de routage étant utilisé pour décrire un chemin de réseau pour acheminer le paquet de données vers un activateur de service ;
l'ajout (103) de l'étiquette de routage de données de service au paquet de données ; et
l'envoi (104) du paquet de données à un commutateur, de telle sorte que le commutateur commande, en fonction de l'étiquette de routage de données de service jointe au paquet de données, le paquet de données à acheminer en fonction du chemin de routage,
le procédé comprenant en outre :
l'obtention d'une chaîne de services en fonction du type de service et d'une correspondance entre le type de service et la chaîne de services, la chaîne de services étant utilisée pour décrire un traitement d'activation de service qui doit être réalisé sur le paquet de données :
la sélection de l'activateur de service conformément au traitement de validation de service ; et
la détermination du chemin de routage en fonction de la chaîne de service et des informations concernant l'activateur de service,
l'obtention d'une chaîne de services en fonction du type de service et d'une correspondance entre le type de service et la chaîne de services comprenant :
l'obtention de la chaîne de services en fonction des informations de service d'utilisateur et d'une correspondance entre les informations de service d'utilisateur et la chaîne de services, les informations de service d'utilisateur comprenant le type de service et des informations d'abonnement d'un utilisateur auquel le paquet de données appartient,
la chaîne de services étant en outre utilisée pour décrire le traitement d'activation de service que le paquet de données doit subir en séquence,
une forme de description de la chaîne de services utilisant un descripteur de chaîne de services, une chaîne de services étant décrite à la manière d'une expression d'Url.

2. Procédé selon la revendication 1, la sélection de l'activateur de service en fonction du traitement d'activation de service comprenant :
la sélection de l'activateur de service en fonction du traitement d'activation de service et d'un facteur de pondération de l'activateur de service, le facteur de pondération comprenant une priorité ou une charge.

3. Procédé selon la revendication 1 ou 2, le procédé comprenant en outre :
la génération d'une règle de réacheminement en fonction du chemin de routage, de façon à commander, à l'aide de la règle de réacheminement, le paquet de données à acheminer en fonction du chemin de routage :
l'établissement d'une correspondance entre la règle de réacheminement et l'étiquette de routage de données de service ; et
l'envoi de la correspondance entre la règle de réacheminement et l'étiquette de routage de données de service au commutateur, de sorte qu'après l'acquisition de l'étiquette de routage de données de service jointe au paquet de données à partir du paquet de données, le commutateur obtient la règle de réacheminement en fonction de l'étiquette de routage de données de service et de la correspondance entre la règle de réacheminement et l'étiquette de routage de données de service, et transmet le paquet de données conformément à la règle de réacheminement.

4. Système de routage de service, comprenant un classificateur de trafic (20) et un commutateur (30),
le classificateur de trafic (20) étant configuré pour analyser un paquet de données reçu pour obtenir un type de service du paquet de données ; obtenir une étiquette de routage de données de service en fonction d'une correspondance entre le type de service et l'étiquette de routage de données de service, l'étiquette de routage de données de service étant utilisée pour identifier un chemin de routage, et le chemin de routage étant utilisé pour décrire un chemin de réseau pour acheminer le paquet de données vers un activateur de service ; joindre l'étiquette de routage de données de service au paquet de données ; et envoyer le paquet de données au commutateur ; et
le commutateur (30) étant configuré pour commander, en fonction de l'étiquette de routage de données de service jointe au paquet de données, le paquet de données à acheminer en fonction du chemin de routage,
le système comprenant en outre : un appareil de sélection de chaîne de service (40) et un appareil de sélection de routage de service (50),
l'appareil de sélection de chaîne de service (40) étant configuré pour obtenir une chaîne de service en fonction du type de service et d'une correspondance entre le type de service et la chaîne de service, la chaîne de services étant utilisée pour décrire un traitement d'activation de service qui doit être réalisé sur le paquet de données ; et l'appareil de sélection de routage de service (50) étant configuré pour sélectionner l'activateur de service en fonction du traitement d'activation de service ; et déterminer le chemin de routage en fonction de la chaîne de services et des informations concernant l'activateur de service sélectionné,
l'appareil de sélection de chaîne de service étant configuré pour obtenir la chaîne de service en fonction des informations de service d'utilisateur et d'une correspondance entre les informations de service d'utilisateur et la chaîne de service, les informations de service d'utilisateur comprenant le type de service et des informations d'abonnement d'un utilisateur auquel le paquet de données appartient,
la chaîne de services étant en outre utilisée pour décrire le traitement d'activation de service que le paquet de données doit subir en séquence,
une forme de description de la chaîne de services utilisant un descripteur de chaîne de services, une chaîne de services étant décrite à la manière d'une expression d'Url.

5. Système selon la revendication 4,
l'appareil de sélection de routage de service (40) étant configuré pour sélectionner l'activateur de service en fonction du traitement d'activation de service et d'un facteur de pondération de l'activateur de service, le facteur de pondération comprenant une priorité ou une charge.

6. Système selon la revendication 4 ou 5, le système comprenant en outre un appareil de détermination de règle de routage de service (60),
l'appareil de détermination de règle de routage de service (60) étant configuré pour générer une règle de réacheminement en fonction du chemin de routage, de façon à commander, à l'aide de la règle de réacheminement, le paquet de données à acheminer en fonction du chemin de routage ; établir une correspondance entre la règle de réacheminement et l'étiquette de routage de données de service ; et envoyer la correspondance entre la règle de réacheminement et l'étiquette de routage de données de service au commutateur ; et
le commutateur (30) étant configuré pour : après l'acquisition de l'étiquette de routage de données de service jointe au paquet de données à partir du paquet de données, obtenir la règle de réacheminement en fonction de l'étiquette de routage de données de service et de la correspondance entre la règle de réacheminement et l'étiquette de routage de données de service, et transmettre le paquet de données conformément à la règle de réacheminement.
